**Europäisches Patentamt**

**European Patent Office**

**Office européen des brevets**

(11) Publication number: **0 137 854**
**B1**

# EUROPEAN PATENT SPECIFICATION

(45) Date of publication of patent specification: **24.01.90**

(21) Application number: **84901010.3**

(22) Date of filing: **02.03.84**

(86) International application number:
**PCT/JP84/00080**

(87) International publication number:
**WO 84/03470 13.09.84 Gazette 84/22**

(51) Int. Cl.⁵: **B 29 D 9/00, B 29 C 47/04, B 32 B 3/00, D 01 D 5/30**

(54) **CROSSED POLYMER LAMINATE, AND PROCESS AND APPARATUS FOR ITS PRODUCTION.**

(30) Priority: **03.03.83 JP 34906/83**
**28.03.83 JP 50441/83**

(43) Date of publication of application:
**24.04.85 Bulletin 85/17**

(45) Publication of the grant of the patent:
**24.01.90 Bulletin 90/04**

(84) Designated Contracting States:
**DE FR GB**

(56) References cited:
**GB-A-2 062 537**
**US-A-3 672 802**
**US-A-4 370 114**

(73) Proprietor: **TORAY INDUSTRIES, INC.**
**2, Nihonbashi-Muromachi 2-chome Chuo-ku**
**Tokyo 103 (JP)**

(72) Inventor: **OKAMOTO, Miyoshi**
**30-16, Ankoji-cho 1-chome Takatsuki-shi**
**Osaka 569 (JP)**

(74) Representative: **Ellis, John Clifford Holgate et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process and a system for producing fibers and films (ribbons) in which high molecular weight structures are alternately arranged in an axial direction.

Examples of high molecular weight composite structures are those known as "island in a sea"-type composite fibers. The ultrathin fibers obtained by dividing them or removing one component therefrom are used for the production of a variety of artificial leathers, waterproof high-density textiles and knittings, raised textiles, tricots, filters, high-grade strings, reinforced fibers, and silky textiles and knittings, and for other beneficial purposes. Composite films are usable as image guides when put one upon another, polarizing plates, high-grade light-reflecting road signs, and in further optical and other applications. So far no process has been presented for easily manufacturing fibers and films with multi-layer high molecular weight composite structures.

Conventional processes and systems for obtaining fibers with multi-layer high molecular weight composite structures are proposed in US—A—4 370 114, starting point of claims 1 and 12, JP—B—18369/1969, —13208/1969 and —26723/1972. These processes are very useful because of the high proportions of the island components and the accurate arrangement of the islands as well as the highly steady spinning and very high controllability thereof, but they are defective in that their cost is unavoidably raised because the number of nozzles cannot be increased, even though the island components are to be extremely increased in quantity.

On the other hand, US—A—3672802, JP—B—3505/1969, —889/1969 and —19604/1968, USP 3,051,453, and others present spining processes wherein the alternate layer (ABABAB . . .) or similar flows of fluids A and B are made and occasionally passed through a sand layer or metal or cloth gauge for their disturbing and splitting, so that the components in large quantity (generally above 50%—this varies slightly in accordance with the differences of viscosity, surface tension, etc.) surround those in small quantity, thus having a dispersion-nondispersion relationship like polymer blend spinnings, by which the spinnings obtained have a fairly regular arrangement of the components by virtue of the spinning holes. They are, however, seriously defective in that the spinning is not steady because the flow line is constantly disturbed, requiring the application of high velocity air (quick cooling) and is not possible at any high speed (take-up); high velocity air-applied spinnings cannot be elongated to any high degree because of their low elongation performance and they have poor physical properties and spinning is not possible because the materials form drops. Particularly serious drawbacks in an industrial respect are that the island components cannot be increased to any high proportion, there is a difference in sectional configuration and a considerable difference in quality among the fibers obtained by multiple discharge holes, and spinning is not steady.

Further JP—B—15530/1972 and others disclose spinning processes and systems with a number of mixed flow passages. They have, however, the problems to be solved by the present invention: all components stratify, the dispersion of components at sections varies constantly, there is a large dispersion among fibers, and island components are not controllable in quantity and cannot be increased to any high proportion.

An object of the present invention is to provide a novel process for the production of multi-layer high molecular weight composite structures suitable for the above purposes and uses, particularly increasing the quantity and proportion of the island components thereof and thereby enhancing their economic and industrial value. Another object of the present invention is to obtain fibers suitable for producing ultrathin fibers by greatly increasing the quantity of the island components.

Another object of the invention is to provide "island in sea"-type fibers and films having such especially sophisticated configurations that the islands thereof have "island in sea"-type configurations also.

A further object of the invention is to provide divided-type fibers of which one component has multi-layer high molecular weight composite structure configurations. Yet another object of the invention is to provide processes for the highly steady spinning of fibers with all of the above configurations.

The invention is summarized as follows:

(1) A process for the production of a multi-layer high molecular weight composite structure wherein a primary multi-layer structure of at least two high molecular weight fluids (A, B...) is made and a secondary multi-layer structure is made by overlapping said primary structure with another high molecular weight fluid C (of which a component may be the same as any of the components of said primary structure) so that the interfaces of the primary structure layers and those of the secondary structure layers subtend an angle θ and the interfaces of the primary structure layers are cut into a number of parts by said fluid C; and discharging said secondary multi-layer structure through a spinning or film nozzle.

(2) Apparatus for foming and discharging the multi-layer high molecular weight composite structure resulting from the above process, comprising:

(a) ducts for the high molecular weight fluids (A, B...) which are to be components of the primary multi-layer structure

(b) a number of connected first alternate fluid arranging elements adapted to receive the high molecular weight fluids from the said ducts and form therefrom the primary multi-layer structure

(c) a duct or ducts for the high molecular weight fluid C

(d) a number of connected second alternate fluid arranging elements adapted to receive the primary multi-layer structure from (b) and the high molecular weight fluid C from (c) and form therefrom the secondary multi-layer structure; and

(e) a discharge element having at least one spinning hole or a film slit.

In this description and in the claims, the juxtaposition of two structures is referred to as "overlapping".

Various forms of the present invention will now be described with reference to the accompanying drawings, wherein:

Figure 1 shows a model section of a fiber with a multi-layer high molecular weight composite structure in accordance with the present invention.

Figure 2 is an explanatory view of an enlarged part of Figure 1.

Figure 3 is a sectional view of a fiber with a multi-layer high molecular weight composite structure in accordance with the present invention.

Figure 4 is a longitudinal sectional view of a multi-layer high molecular weight composite structure in accordance with the present invention.

Figure 5 shows a model section of a core-sheath type composite fiber made by covering a multi-layer high molecular weight composite structure in accordance with the present invention with another component.

Figure 6 shows a model section of an "island in a sea"-type composite fiber whose island component is a multi-layer high molecular weight composite structure, in accordance with the present invention.

Figures 7 and 8 show model sections of a composite fiber of which one component is a multi-layer high molecular weight composite structure in accordance with the present invention.

Figure 9 is an explanatory diagram of the basic principle of obtaining a multi-layer high molecular weight composite structure in accordance with the present invention.

Figure 10 is an explanatory diagram showing the basic principle of fluid distribution for obtaining a multi-layer high molecular weight composite structure in accordance with the present invention.

Figures 11 and 12 are explanatory views showing alternate fluid arrangements for obtaining a multi-layer high molecular weight composite structure in accordance with the present invention.

Figure 13 is an explanatory diagram showing the basic principle of the alternate fluid arrangement in an alternate fluid arranging element suitable for obtaining a multi-layer high molecular weight composite structure in accordance with the present invention.

Figure 14 is an explanatory diagram showing the principle and structure of a fluid transforming element.

Figure 15 is a sectional diagram showing an alternate fluid arranging element suitable for obtaining a multi-layer high molecular weight composite structure in accordance with the present invention.

Figure 16 shows sectional views of an alternate fluid arranging element as in Figure 15.

Figure 17 shows perspective views of the two-member alternate fluid arranging element suitable for obtaining a multi-layer high molecular weight composite structure in accordance with the present invention.

Figure 18 shows sectional views of a preferred system for discharging a multi-layer high molecular weight composite structure in accordance with the present invention.

Figure 19 is an explanatory view of the relationship between the pack mantle and insert blocks for fitting an alternate fluid arranging element suitable for obtaining a multi-layer high molecular weight composite structure in accordance with the present invention.

Figure 20 shows explanatory views of various types of flow.

Figure 21 is an explanatory view of other modes of arranging first and second alternate fluid arranging elements usable for obtaining a multi-layer high molecular weight composite structure in accordance with the present invention.

Figure 22 shows explanatory views of types of distributors that can be provided between first and second alternate fluid arranging elements usable for obtaining a multi-layer high molecular weight composite structure in accordance with the present invention.

Figures 23 to 25 are explanatory views of arrangements of first and second alternate fluid arranging elements and various fluid distributor systems that can be used for obtaining a multi-layer high molecular weight composite structure in accordance with the present invention.

Figure 26 shows a partial section of a discharger for a core-sheath type composite fiber whose core is a multi-layer high molecular weight composite structure in accordance with the present invention.

Figure 27 shows a partial section of a discharger of an "island in a sea" composite fiber whose islands are a multi-layer high molecular weight composite structure in accordance with the present invention.

Figures 28, 29, 30 and 31 are explanatory views of various systems for about 90°-twisted feed of fluids usable for obtaining a multi-layer high molecular weight composite structure in accordance with the present invention.

Figures 32 and 33 are perspective views of alternate fluid arranging elements (with their outer circumference omitted) usable for obtaining a multi-layer high molecular weight composite structure in accordance with the present invention.

Figure 34 shows views of a duct (fluid passage) extending between the inlet and outlet of the alternate fluid arranging element shown in Figure 33.

Figure 35 is a conceptual diagram illustrating the movement of a fluid in a combination of conventional alternate fluid arranging elements.

Figure 36 is a conceptual diagram illustrating the movement of a fluid in a combination of alternate fluid arranging elements usable in the present invention.

Figures 37 to 40 are perspective views of the alternate fluid arranging elements (their outer circumference is omitted) usable in the present invention.

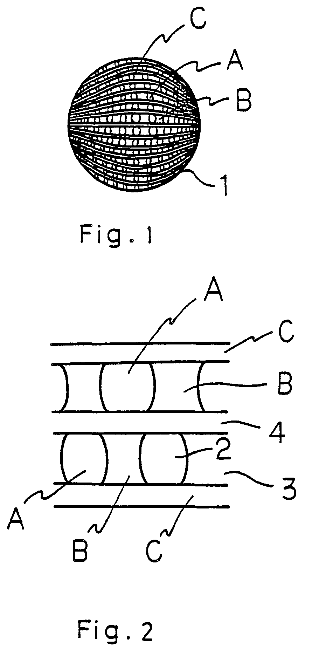

Figure 1 shows a cross-section 1 of an example of a three component composite fiber having axial multi-layer high molecular weight composite structures, wherein a number of layers of two components A and B are arranged with a third component C (which may be the same as A or B) at the interfaces between these AB layers. Films (including ribbons) comprise these composite structures extending in a plane.

The interfaces between the A and B layers are generally parallel to each other as described later. As the A layers are smaller than the B layers, however, the former becomes smaller and circular or elliptic due to differences in viscosity and boundary tension between the A and B layers. The same may occur when A and B are substituted for each other in some cases. However, this does not affect the effectiveness of the invention and produces rather favorable effects when ultrathin fibers are produced.

The parallel arrangement of the AB and C layers is theoretically possible but not generally attainable. This is because viscous fluids act like high molecular weight solutions in that flow velocity is highest at the center of a pipe but becomes lower closer to the wall. The flow is said to show a parabolic sectional dispersion in circular pipes. When discharged through discharge holes and taken up at a fixed high velocity, high molecular weight materials are elongated because their supply is carried out continuously at their center but not sufficiently in the portion close to the wall. The materials therefore maintain a narrow dispersion at the holes close to the wall and show a wide dispersion at the center, i.e. the island component layers (e.g. A) are thick at the center and thin at the edge.

Figure 2 is an enlargement of a part of Figure 1. The following is an example of a multi-core feature of the fiber: if A, B and C are nonadehesive polymers, polymer C can be separated from the polymers A and B first, then A and B are separated by physical or chemical means after a fiber or film is formed. Their layers and total can be increased to large quantities. A water jet (a thin strong water flow, a needle—e.g. JP—B—7274/1961, —18069/1972, —13749/1973, —59348/1982, —22230/1969, —58463/1982, etc.) is included among the preferable layer separating means for products made by processing such fibers with multi-layer high molecular weight composite structures using known methods. Ultrathin component A fibers are obtained if B is removed using a solvent or cracker. Ultrathin fibers containing A only are obtained if this removal is carried out while C and B are combined.

If only the thin thread shaped parts are exposed to the surface of components A or B, then fibers with a high color development performance are obtainable, provided they are sufficiently thin.

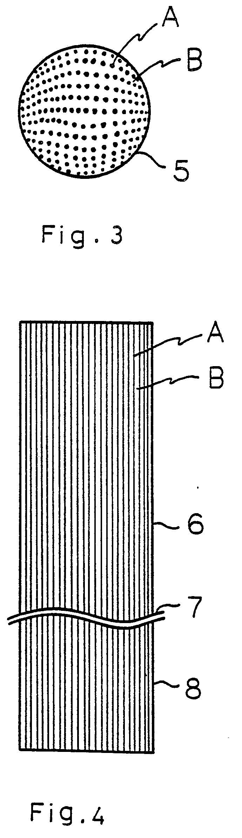

Figure 3 shows a multi-core composite structure, i.e. an "island in a sea" type composite fiber, with a large quantity of island component A dispersed along the layer structure at one cross-section 5 thereof. Component B is a sea component. The fiber is obtained when component C in Figure 1 is the same as component B. The islands of component A have a round appearance when component A is more viscous than component B. This form is suitable for fibers with a large quantity, 100—100,000, of islands. Further the island component ratio can be markedly increased or decreased. In accordance with the present invention, fibers are steadily obtainable with a good elongation performance and an excellent island molecule orientation.

Figure 4 is a longitudinal section of a multi-layer high molecular weight composite structure in accordance with the present invention, wherein the components are arranged uniformly and longitudinally along the fiber or film. Particularly, components A and B in Figure 3 are arranged substantially parallel to the fiber axis. This can be well understood by comparing Figures 3 and 4. Component A is represented by lines and numeral 7 is a general symbol indicating the omitted middle part.

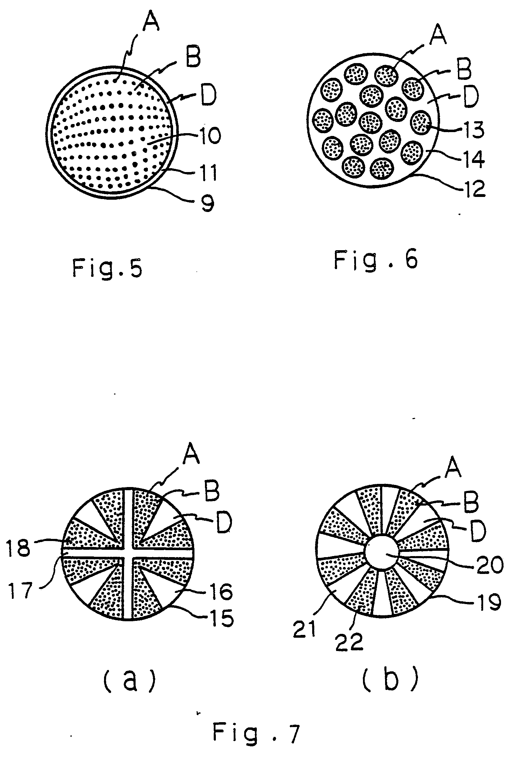

Figure 5 shows another multi-layer high molecular weight composite structure in accordance with the present invention, which is covered with another component 11 (component D) wherein either component A or B 10 is not exposed substantially to the sectional circumference of the fiber. When A is an island component, component D should preferably be the same as component B to prevent the separation of component A from the fiber and to obtain a number of ultrathin fibers at once by removing B.

Of course component D may be the same as component A or different from components A and B for various purposes. The fibers obtained in these cases can be said to be of core-sheath composite type because their core is a multi-layer high molecular weight composite structure in accordance with the present invention and their sheath is component D. They are particularly effective for preventing the separation of component A with a small number of splits from component B.

Figure 6 shows an "island in a sea" type composite fiber whose island and sea components are AB 13 and D 14 respectively. The former are comprised of the sophisticated fiber having a multi-layer high molecular weight composite AB structure. Therefore, the fiber 12 can be said to be an "island in a sea" type composite fiber. Particularly, island component A is suitable for obtaining ultrathin fiber bundles since it is dispersed to a considerable extent. The islands are illustrated here as large circles, although in reality they are too small and too numerous to illustrate. Of course, the components are arranged parallel to the fiber axis.

Figure 7(a) shows a divided type multi-layer high molecular weight composite structure fiber. At its cross-section 15, component AB 18, a multi-layer high molecular weight composite structure with a sectional distribution as shown in Figure 3, is divided by dividing components 16 and 17.

Figure 7(b) shows a hollow divided type composite fiber 19. Its multi-layer high molecular weight composite AB structure 22 is divided into a number of parts by component D21. Its central part 20 is hollow. Dividing component D may be the same as A or B.

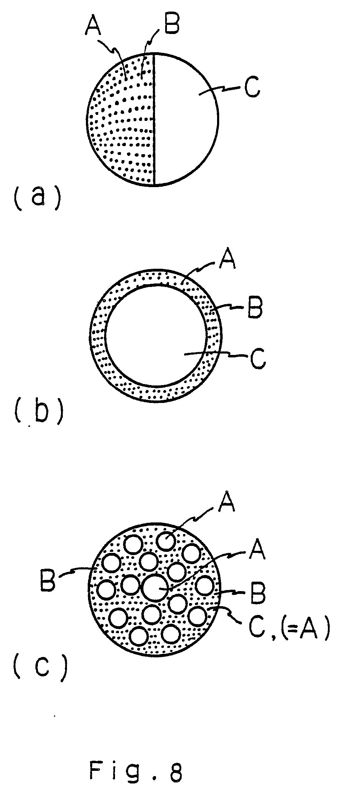

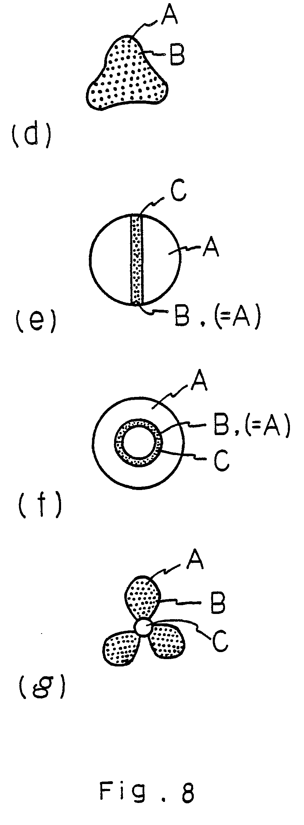

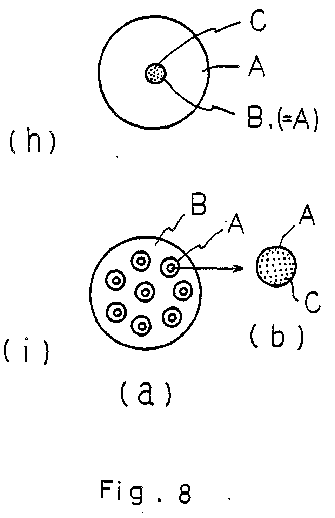

The process and system for producing the fibers involve introducing the flow of multi-layer high molecular weight composite structures through the nozzles referred to in JP—B—54707/1974, —7368/1974, —73103/1975, —60769/1975, —14608/1975, —4320/1975 and —13620/1975 for the types of fiber in Figure 7, and in JP—A—70366/1976, —130317/1975 and —40424/1975 for the types of fiber in Figure 8. The same simple procedure can be used to make these fibers as well as the fibers in Figures 1, 5 and 6. The processes and systems for obtaining the sophisticated fibers as exemplified in Figures 8(a) to 8(i) are referred to above.

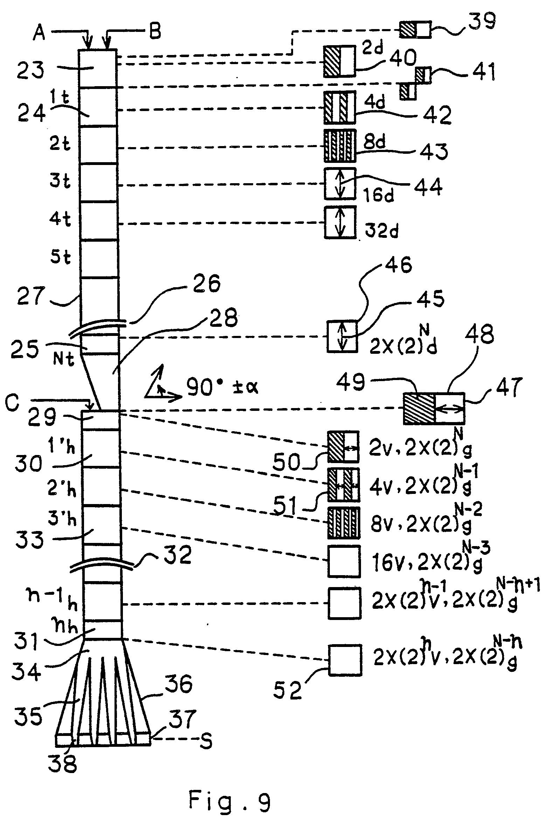

Figure 9 illustrates the basic principle of how superior multi-layer high molecular weight composite structures can be easily obtained using the system and process according to the present invention. A and B are introduced into a fluid introducing part 23 by pumps. The fluid introducing part 23 can be part of an .alternate fluid arranging element. Provided thereunder are other alternate fluid arranging elements. Numeral 24 indicates the first stage thereof (1t). Subsequent stages (2t ... Nt) are indicated thereunder. The N-th stage 25 is Nt. There are called first alternate fluid arranging elements.

At that time fluids A and B are subjected to the simplest lamination 39 at the inlet and transformed into 40 (2d). Next, fluid AB acquires such a structure 41 to fit alternate fluid arranging element 24, and subsequently acquires structure 42 at the central part of the element 24 and for the first time is divided into four layers (4d). Similarly structure 8d is obtained at 2t, ... $2\times2^N$d at Nt to reach the final structure. Alternate fluid arranging elements function by alternately arranging fluid layers one by one. They are a kind of so-called static-type fluid mixer, but are required to be capable of performing alternate fluid arrangement as well as mixing. Alternate fluid arranging elements are the basic units used for alternately arranging fluids and are arranged in multiple stages. Examples of alternate fluid arranging elements will be described later.

In Figure 9 arrows 44 and 45 show the direction of the interface between A and B. Detailed drawings at 3t, 4t and Nt are omitted for clarity, but 42 and 43 illustrate the general idea. Numerals 26 and 32 are abbreviated symbols to indicate that a number of such elements are used.

The $2\times2^N$ layers (component A constitutes half of these layers) of primary structure flow are next arranged alternately with layers of component C and this multi-layer structure is introduced into second atlernate fluid arranging elements. The relationship between the directions of the interfaces between component C layers and the interfaces formed between AB layers at the upper course is very significant. It is preferable that the angle θ therebetween is about 90°. Figure 9 shows these interfaces twisted by 90°±α (0<α<90°). Either the upper or lower course parts may be twisted or a fluid twisting element may be provided, as will be described later.

Fluid AB is introduced into the introducing part 29 of the next alternate fluid arranging element so that after lamination with component C it passes as smoothly as possible through a square funnel. This is indicated by 48 and 49. The direction of the interfaces AB that is twisted by 90°±α is indicated by the arrow 47 (in the drawing, twisting is by 90°). When falling further into 29, fluids AB and C are transformed into 50. This structure has two principal secondary layers, which are represented by 2v. At this time it has $2\times2^N$ AB multi-layer structure layers and one component C layer. In the drawing at stage 50 the former are represented by $2\times2^N$g, with the AB interfaces lying in a direction shown by the arrow. Connected to 29 are a number of alternate fluid arranging elements 30 (1'h) ... 31 (n'h). These are called second alternate fluid arranging elements.

In the 1'h stage the $2\times2^N$ layers of AB between C decreased to $2\times2^{(N-1)}$, i.e. $2\times2^{(N-1)}$g. Similarly, in the 2'h stage the $2\times2^{(N-1)}$ layers of AB between layers C decrease to $2\times2^{(N-2)}$, i.e. $2\times2^{(N-2)}$g. This is important for understanding the invention. It will be described later in further detail in connection with the illustration of a system. By the n'h stage, the $2\times2^N$ ($2\times2^n$v) layers of AB between layers C have decreased to $2\times2^{(N-n)}$, i.e. $2\times2^{(N-n)}$g. Numeral 52 indicates a section of fluid ABC (Figure 2) although it is too detailed to be illustrated. When it is discharged through a nozzle, a fiber or film with such a section is obtained. If many nozzle holes are to be used, the same quantity of nozzles as nozzle holes should be constructed. If distribution is made smoothly using a multi-leg funnel 36 as shown in Figure 9, however, the number of laminations decreases by an amount corresponding to the number of divisions (legs). Nevertheless, the discharge of multi-layer high molecular weight composite structures remains possible. Numeral 37 denotes nozzle S with discharge holes 38. It is important to give a suitable shape to a funnel 35 for as smooth introduction of fluids as possible into nozzle holes 38 from the lower part 36 of an alternate fluid arranging element. If a component D is introduced together with component C, they both form thin laminated layers. It is clear that flow CD would be arranged so as to intersect flow AB. On the other hand, it is also clear from the description made heretofore that a multi-layer flow ABE may be formed by adding component E to flow AB. Heretofore, the discussion has concerned a primary multi-layer structure comprising only two components A and B. Of course, it is applicable to one comprising three or more components also. For simplicity, however, the description will continue as to the two component arrangement.

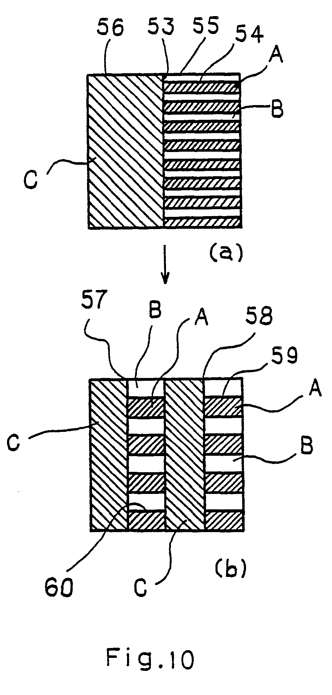

Discussion will now be made in further detail as to the key points of the invention, with reference to Figure 10. Numeral 55 in Figure 10(a) denotes multi-layer flow AB. It is obtained by introducing flow AB into a number of alternate fluid arranging elements arranged in series. The drawing shows this flow overlapping component C after being introduced almost orthogonally therewith. The change of the flow ABC passing the first stage of alternate fluid arranging elements is shown in Figure 10(b). In Figure 10(a), numerals 56, 53 and 54 indicate component C, the interface between layers AB and C, and the interface between layers A and B, respectively. It should be noted that 53 and 54 intersect each other substantially orthogonally. This example shows eight layers A and eight layers B. The layers in Figure 10(a) are compressed laterally so that their longitudinal size increases by a factor of two and layers AB become twice as thick. The structure is then divided into two parts across the middle, and the two halves are put one upon another as shown in Figure 10(b). If the overlapping of A, B and C is made so that all the interfaces therebetween become parallel, a known multi-layer structure ABCABCABCABC . . . is obtained, which is not aimed at by the present invention. Layers AB are thus inserted between layers C to separate them. Numerals 57 and 58 indicate the interfaces between layers C and AB, and 59 and 60 indicate the interfaces between layers A and B. The following points should be noted: there still remains a substantial orthogonal intersection between 57 and 60 and between 58 and 59, the number of AB layers in a given longitudinal direction has decreased by a half, as has the width of the AB layers. Thus to obtain layers of A and B with a nearly square cross-section (or round due to boundary tension) it is necessary to have twice as many divisions of A and B as there are layers of C. To obtain well-dispersed A or B, therefore, preferably 1.5, or more preferably 1.8—3, times as many divisions of A and B as there are layers of C are needed.

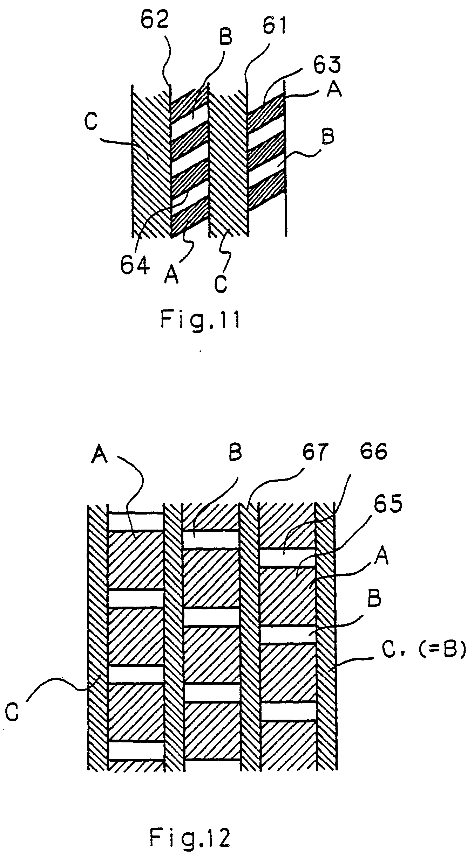

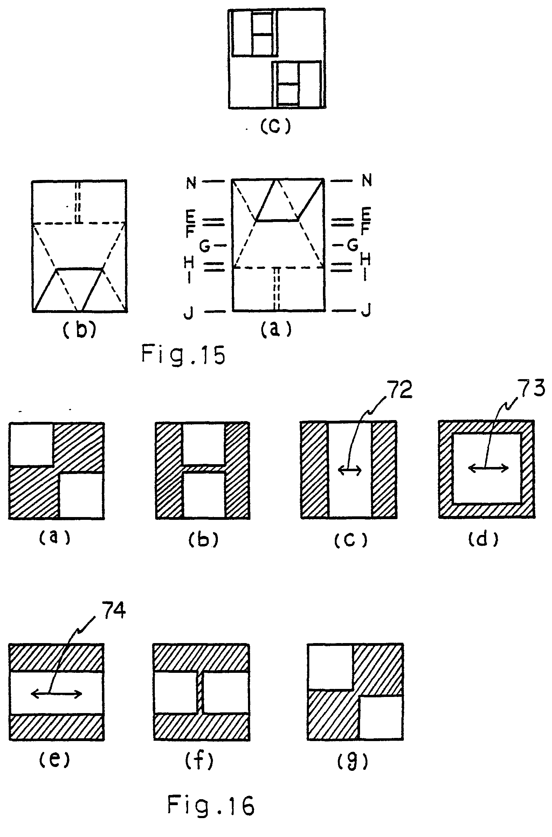

Figure 11 shows substantially the same relationship between the components as in Figure 10, except that now the interfaces 63 and 64 between the A and B layers are slanted at angle θ to the interfaces 61 and 62. In other words, the interfaces between layers A and B are cut into a number of parts by layer C. When

$$\theta = \pm(90 \pm a) \pm (\text{integer}) \times 180°,$$

it is preferable that a lies in the range $0 < a < 45$, or more preferably in the range $0 < a < 15$, with the result that the final angle θ is effectively between 90° and 45°.

Component layers A and B are formed thick or thin according to whether the quantities introduced are increased or decreased respectively when the AB flow is formed. If a small quantity of component C is additionally introduced into the multi-layer structure, a final structure with a high proportion of component A islands is obtained, as shown in Figure 12. This value is particularly increased when components B and C are removed to leave just component A. In many cases it is therefore preferable that B=C in Figures 10, 11 and 12. If layers BC can be formed without causing any disturbance, then component A can be increased to a particularly high proportion.

Next, the multi-layer fluid structures that produce favourable effects for the present invention and why such effects and configurations as shown in Figure 10 are obtained will be described in further detail.

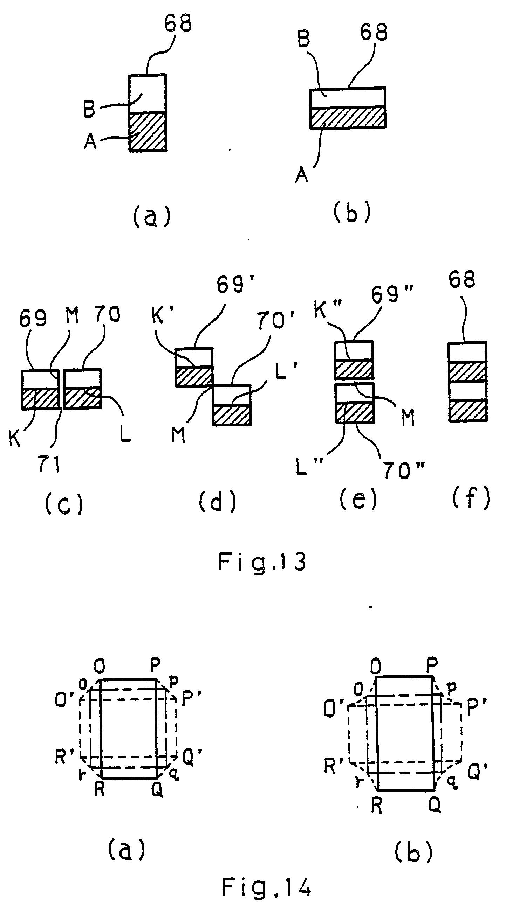

JP—A—145522/1980 (fluid mixer) discloses an alternate fluid arranging element that produces a suitable effect for the present invention. The mechanism by which a suitable multi-layer structure of A and B is produced by such an element is explained in Figure 13, which illustrates the cross-sectional appearance of the flows of A and B at successive stages during the passage through the element.

As shown in Figure 13(a), fluids A and B are supplied to one longitudinally-rectangular passage 68. Passage 68 is transformed laterally into the rectangular shape shown in Figure 13(b), but the cross-sectional area of the passage 68 in Figures 13(a) and 13(b) is substantially constant. During the change from Figure 13(a) to Figure 13(b), the cross-sectional shape of passage 68 varies continuously, but its cross-sectional area does not vary substantially. This part of the passage 68 between the states depicted in Figures 13(a) and 13(b) is called the shape-varying part.

Next, passage 68 is divided by a wall 71 into two passages 69 and 70, equal in cross-sectional area and of the same shape. Figure 13(c) shows the relationship between M (the center of the duct), K and L (the centers of the divided passages 69 and 70). As shown in Figure 13(d), passage 69 is transformed into passage 69' by transferring its center K upward to K' while maintaining its cross-sectional shape and area and passage 70 is transformed into passage 70' by transferring its center L downward to L' while maintaining its sectional shape and area. During the change from Figure 13(c) to Figure 13(d), the centers of the passages 69' and 70' are always symmetrical about the center M of the duct. Both passages remain equidistant from the center M of the duct. Further, as shown in Figure 13(e), passage 69' is transformed into passage 69'' by transferring its center K' to the right to K'', and passage 70' is transformed into passage 70'' by transferring its center L' to the left to L''. Again, the point-symmetric relation is maintained. Passages 69'' and 70'' take such a form that their centers K'' and L'' lie on a line parallel to the line of the dividing wall 71, as shown in Figure 13(e). Figure 13(f) shows the fluids having emerged from passages 69'' and 70'', now overlapping one another in the next passage 68. This part of the passage 68 between the states depicted in Figures 13(c) and 13(f) is called the transfer part.

Figure 14 illustrates the transformation process from the state in Figure 13(a) to that in Figure 13(b).

Figure 14(a) shows a mode of the cross-sectional variation between the two states of the passage 68 (solid and dotted lines). The solid lines indicate the first rectangular cross-section OPQR of the passage 68 and the dotted lines represent the second rectangular cross-section O'P'Q'R'. For an intermediate, square cross-section opqr, having o, p, q and r lying midway on straight lines OO', PP', QQ' and RR', respectively, and having edges op, pq, qr and ro parallel to OP, PQ, QR and RO respectively, this represents a maximum cross-sectional area of 1.125 times that of the rectangles OPQR and O' P' Q' R'. The variation in cross-sectional area of this system is considerably smaller than (about $\frac{1}{2}$ that of) the mixers (alternate fluid arranging elements) mentioned in JP—B—437/1964, and therefore such a system may be used for the system of the present invention. (The variation in cross-sectional area may thus be regarded as substantially zero). For obtaining higher precision systems, straight lines OO', PP', QQ' and RR' should be changed to rectangular hyperbolas as shown in Figure 14(b). The passage thus obtained does not vary in cross-sectional area at all.

Further, the cross-sectional area is variable to a minimum or maximum value by selecting the appropriate curves for the interconnecting lines OO', PP', QQ' and RR'.

The cross-sectional shape of the inlet and outlet of passage 68 (Figures 13(a), 13(b) and 13(f)) of an alternate fluid arranging element suitable for use in the present invention should most preferably be rectangular. Systems can thus be made with a minimum cross-sectional area. The invention is not limited to these, however.

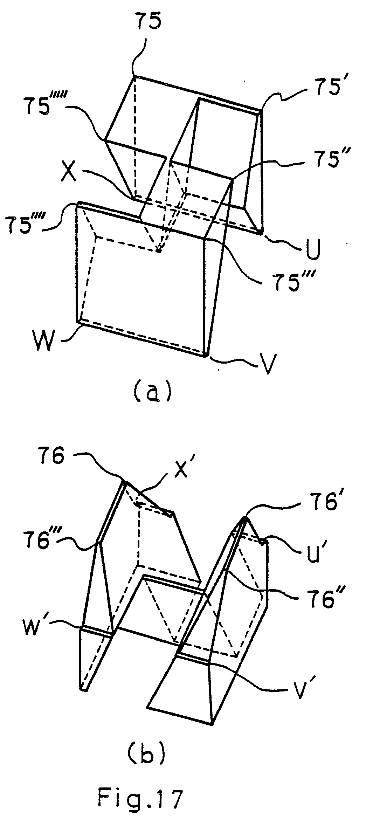

Figure 15 shows an alternate fluid arranging element suitable for obtaining structures according to the present invention. Figures 15(a), 15(b) and 15(c) show the front view, side view and plan respectively. In use a plurality of these elements are connected in series. In many cases, however, adjacent elements are connected to each other to assist the introduction and discharge of fluids (they are applicable to the introduction and discharge parts for fluids A and B and those for fluids C and AB in Figure 9).

Figures 16(a)—(g) show the cross-sections N—N, E—E, F—F, G—G, H—H, I—I and J—J of Figure 15.

It should be noted that the double-headed arrows indicate that the two fluids are flattened and elongated together with their interfaces in the same direction as the interfaces in the sequence shown in (a), (b) and (c). This diagram helps to explain the process by which the multi-layer structure of Figure 10 is formed from fluids AB and C.

Figure 17 is a perspective view of a divided 2-member alternate fluid arranging element. The unit is formed by bringing U, V, W and X of member (a) and u', v', w' and x' of member (b) into contact.

Figure 17(a) shows uppermost-located 75, 75'...75''''', and Figure 17(b) upwardly-protruding 76, 76'...76'''.

If members (a) and (b) are arranged in a square tube with a quadrate hole through the sections, the unit is easy to assemble and dismantle.

Alternate fluid arranging elements are a kind of so-called static-type mixers. The meaning of "mix" is different from "arrange", hence the designation is distinguished in the present description. It is known that mixers can be of two types: (1) for transit to a relative position in a plurality of passages and (2) for transit to a relative position due to the sectional flow-velocity distribution in a passage. The former is considerably more suitable for the present invention. The alternate fluid arranging elements mentioned in Netherlands Patent No. 185539, USP 3206170, USP 3583678 and JP—B—437/1964 are inferior to that mentioned above, but are the next most suitable elements for use in the present invention.

JP—B—437/1974 describes a system for making multi-layer structures of two high molecular weight fluids by dividing and rejoining the two flows. This system is inferior to that described above because the fluids tend to be disturbed in the passages which increase and decrease in cross-sectional size, but it may nevertheless be used in the present invention.

JP—A—94945/1973 discloses an alternate fluid arranging element with a number of built-in divided flow units connected in series. This is also applicable to the present invention, as are the following two units: Square Mixer manufactured by Sakura Seisakusho, SMV Type Static Mixer manufactured by Sulzer, Switzerland, (in which it should be noted that the fluids are in a slanting arrangement).

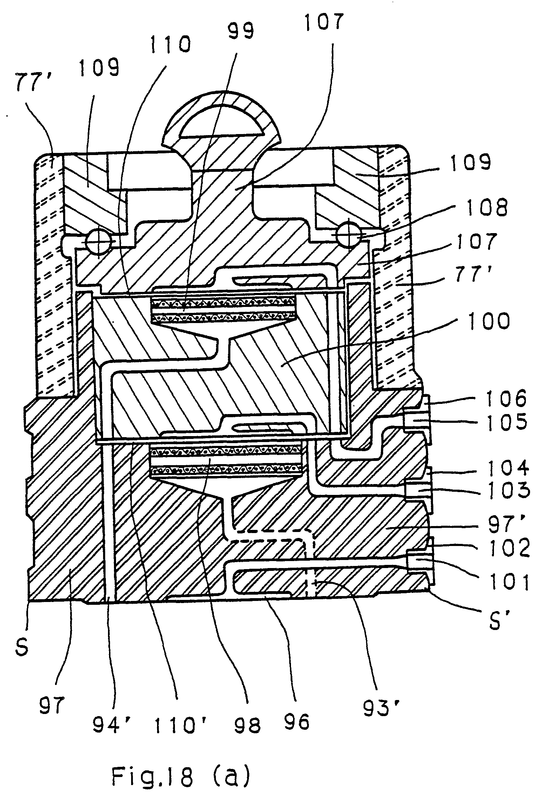

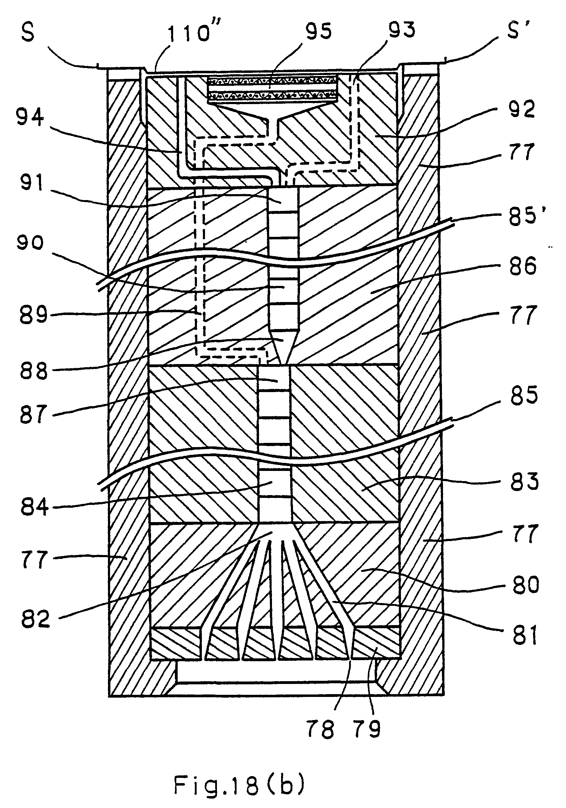

Figures 18(a) and (b) show two halves of a discharger for multi-layer high molecular weight composite structures according to the present invention. To illustrate the whole unit the two Figures should be combined by bringing S and S' in Figure 18(a) into contact with S and S', respectively, in Figure 18(b).

Numeral 77 denotes a mantle, 77' a part with a cut therein, 78 a discharge hole in a nozzle, 79 a nozzle, 80 an insert block with a fluid distribution hole 81, 82 a multi-layer structure-forming space, 83 a second alternate fluid arranging element insert block, 84 a second alternate fluid arranging element, 85 and 85' omission symbols, 86 a first alternate fluid arranging element insert block, 87 a second alternate fluid arranging element, 88 a funnel for introducing an AB multi-layer flow into the second alternate fluid arranging elements, 89 a component C-introducing passage in 86, 90 a first alternate fluid arranging element, 91 a first alternate fluid arranging element, 92 an insert block including A, B and C fluid-introducing passages and a component C filter 95, 93 a component A-introducing passage, 94 a component B-introducing passage, 96 a component C-introducing passage, 97 an insert block including the inlet for introducing components A, B and C from the outside and having a component A filter 98, 100 an insert block including a component B filter 99, 101 a component C-introducing part, 102 a packing, 103 a component A-introducing part, 104 a packing, 105 a component B-introducing part, 106 a packing, 107 a cover serving also as a component B passage, 108 a ball bearing for facilitating the turn of a clamp screw 109, and 110 a packing between the insert blocks.

The packings are connectable by pressing them against the 3-component supply holes in the spinning head. No illustration of the alternate fluid arranging elements is necessary, since they are described in detail above.

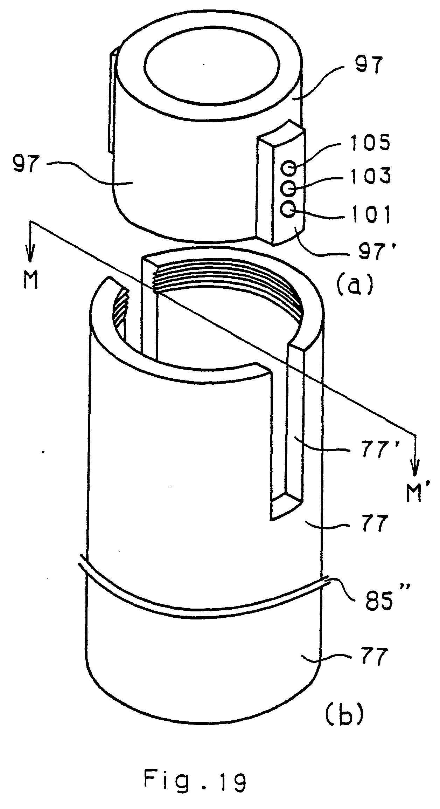

Figure 19 is a perspective view illustrating how insert block 97 is packed in the pack mantle.

The insert block represented by numeral 97 has a projection 97' and introducing holes 101, 103 and 105. This is easier to visualise if Figure 18 is taken as showing the cross-section M—M' of the pack mantle 97.

Alternate fluid arranging elements are generally desired to be circular, because holes are easier to make therein using a lathe or a drill. A method of providing square holes in the insert blocks requires that cutting is carried out after making small holes. Another method for the same consists of dividing the insert blocks in two, making square grooves, combining and fastening them using screws, cutting their surface to adjust them to the inner size of the pack mantle, and welding them.

Next, the modes of arrangement of the first and second alternate fluid arranging elements will be discussed.

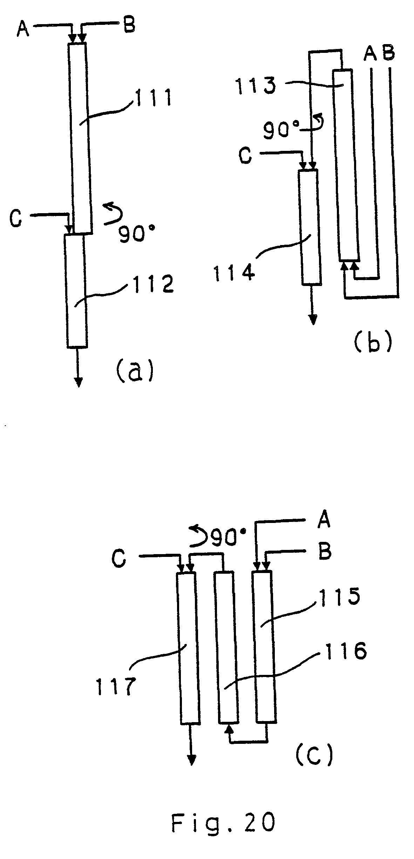

Figure 20(a) shows the connection of the second alternate fluid arranging elements arranged in series with the first alternate fluid arranging elements.

In the case where the arrangement in Figure 20(a) is not convenient because of its excessively large longitudinal size, Figure 20(b) shows an arrangement of first alternate fluid arranging elements 113 for introducing fluids A and B together with component C into second alternate fluid arranging elements 114 without causing any disturbance.

In the case where the arrangement in Figure 20(b) is not convenient because of its excessively large longitudinal size, Figure 20(c) shows first alternate fluid arranging elements divided into two longitudinal arrangements 115 and 116 for introducing fluids A and B together with component C into second alternate fluid arranging elements 117 without causing any disturbance.

Of course, an angle of 90°, for example, is necessary between 111 and 112, between 113 and 114 and between 116 and 117.

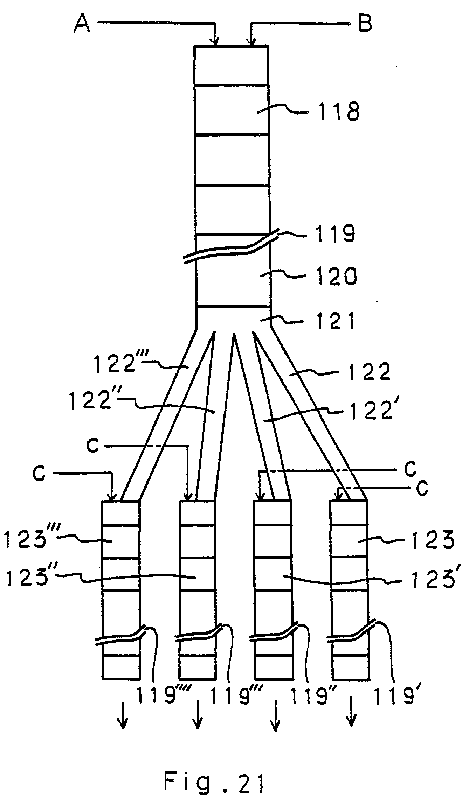

Figure 21 shows a preferable arrangement of a plurality of groups of second alternate fluid arranging elements 123 provided for a group of first alternate fluid arranging elements 118 to 120. Numerals 119 are omission symbols.

Multi-layer fluid AB structure passes through branch conduits 122 from 121 and is introduced into the second alternate fluid arranging elements 123 together with component C while twisted by 90°. It should be noted that the fluid AB is axially divided into more parts by the branch conduits 122.

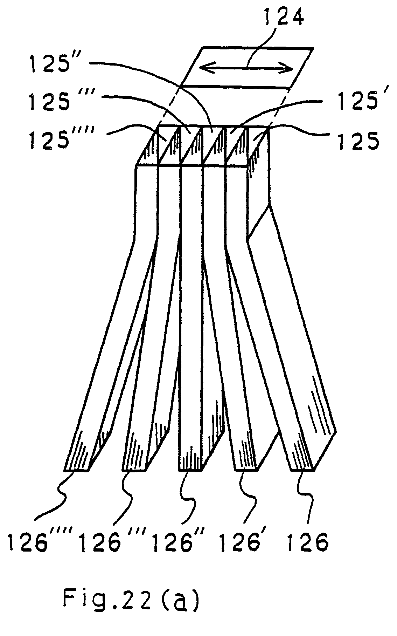

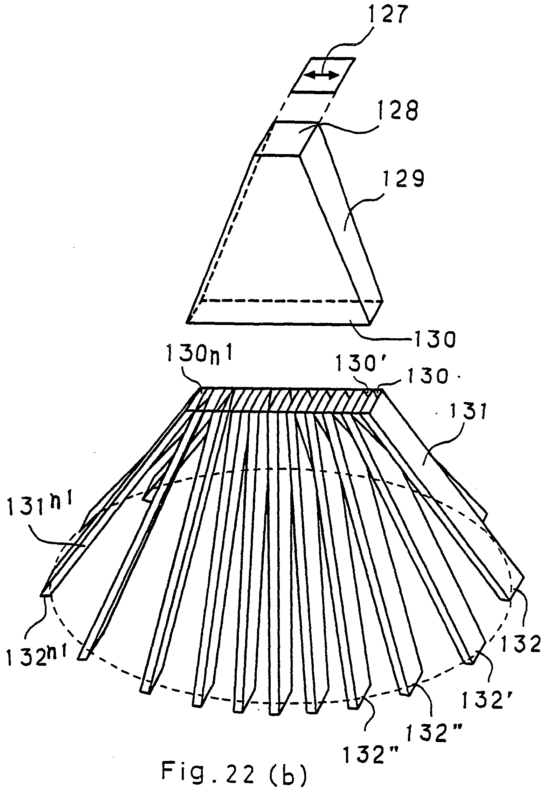

Figure 22(a) shows a configuration and a mode of forming the branches of the fluid AB. The direction of the fluid AB layers is indicated by arrow 124. Several divisions 125 (five in the drawing) are provided orthogonally to the arrow 124. It should be noted that they are not parallel to the arrow 124.

Numerals 125 and 126 are equivalent to 121 and 122 in Figure 21. The multi-layer AB structure can form the next multi-layer structure with fluid C after having been divided into the branches 126.

On the other hand, Figure 22(b) shows a duct and a mode for axially elongating fluid AB layers lying in the direction of arrow 127 when they are introduced into 128.

Fluid 130 obtained by increasing the cross-sectional area of fluid 128 is divided into (n) parts (20 in the drawing) 130, 130' ... 130n' when passed through conduits 131, ... 131n' and the divisions are subjected to alternate distribution with fluid C. (In the drawing distribution is made to 132, 132', ... 132n', which lie alternately in a circular formation).

Distribution efficiency can thus be considerably raised. In accordance with the invention, however, this is possible in some cases by providing additional alternate fluid arranging elements in the space occupied by 128, 129 and 130.

In order to successfully carry out the present invention it is important not to form any empty spaces in the fluid flow, not to repeat the sudden increase and decrease in cross-sectional area of the fluid, not to suddenly change the flow direction, not to excessively reduce the absolute cross-sectional area of the flow (layer) without smoothly and slowly funnelling fluids immediately before the hole of the discharge ports, and to reduce residence time.

The cross sectional area of the fluids should preferably be decreased to less than 1/15 of the original value, i.e. not excessively.

A total of four components is necessary when another component D is desired to be used for surrounding the multi-layer high molecular weight composite structure or to be added for making an "island in a sea"-type composite fiber as shown in Figures 5, 6, 7 and 8. In many cases, so many components are not necessary for fibers, and the nozzle holders (packs), pumps, driving parts and circuits allowing for so many components are also unnecessary, this being uneconomical. When another component is desired to be added to what is shown in Figure 20(a), component B is preferably equal to component C in many cases.

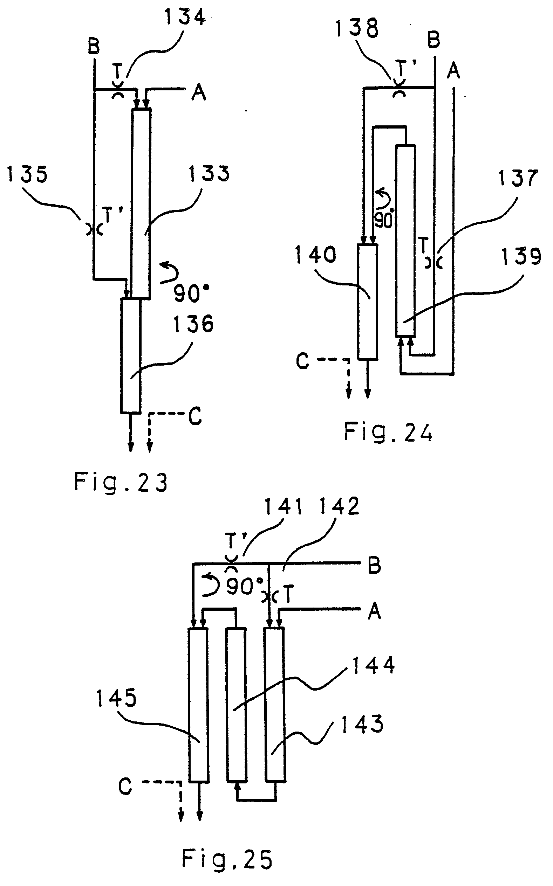

Figure 23 shows a preferable method for selecting the same component C as B among the components of the multi-layer AB composite structure in Figure 20(a). Thus, when component B is included among the components of a multi-layer AB structure, it is preferable to provide resistors T and T' for passing two divisions thereof before they flow into alternate fluid arranging elements. The feed of desired amounts of fluid B is possible using the controllable resistors 134 and 135 (control should be made by using a screw or by providing small pipes). Numeral 133 denotes first alternate fluid arranging elements and 136 second alternate fluid arranging elements. Component C is thus usable as the fourth component (D).

Good distribution is possible by providing resistor T at 137 and resistor T' at 138 in Figure 20(b) for the two divisions of fluid B, as shown in Figure 24 and by providing resistor T at 142 and resistor T' at 141 in Figure 20(b) for the two divisions of fluid B, as shown in Figure 25. Without them, no equal distribution can be maintained for a long period. Numerals 139, 143 and 144 denote first alternate fluid arranging elements, and 140 and 145 second alternate fluid arranging elements. Component C is usable in the same manner as stated above.

It is clear from Figure 18 that all the resistors in Figures 23—25 can be packed in the insert blocks.

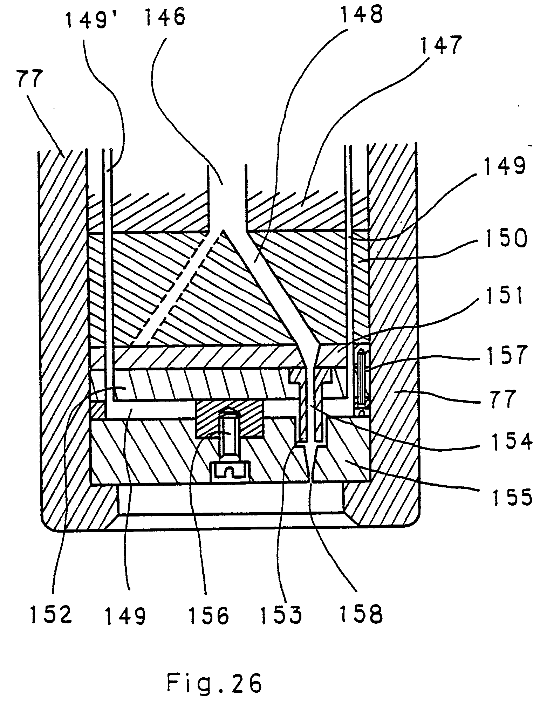

Figure 26 shows a structure for use in a process for obtaining such a fiber as shown in Figure 5, whose core is a multi-layer high molecular weight composite AB structure and sheath is component C, using the systems of Figures 23 and 18. The multi-layer AB structure is introduced into 146. An alternate fluid arranging element is placed thereabove i.e. in the insert block 147. The distribution of the multi-layer flow in 146 is made by lead holes 148. The introduction and distribution of the high molecular weight fluid C is made through lead holes 149 in a similar manner.

The multi-layer structure flow is introduced into holes in the first upper nozzle plate 151. A hollow projection 153 on the second nozzle plate 152 thereunder is directed downwardly, the hole 154 provided therethrough communicating with lead hole 148. The projection 153 is kept beneath the upper plate 151 for preventing its upward motion out of 152. It is fitted into a recess in 155, maintaining a small clearance therewith. Discharge hole 158 is provided at the bottom of the recess.

High molecular weight fluid C is introduced between the nozzle plate 152 and 155 from 149, passes through the small clearance and discharged from 158 surrounding the multi-layer flow. The screws 156 and 157 are used to fasten the nozzle plates.

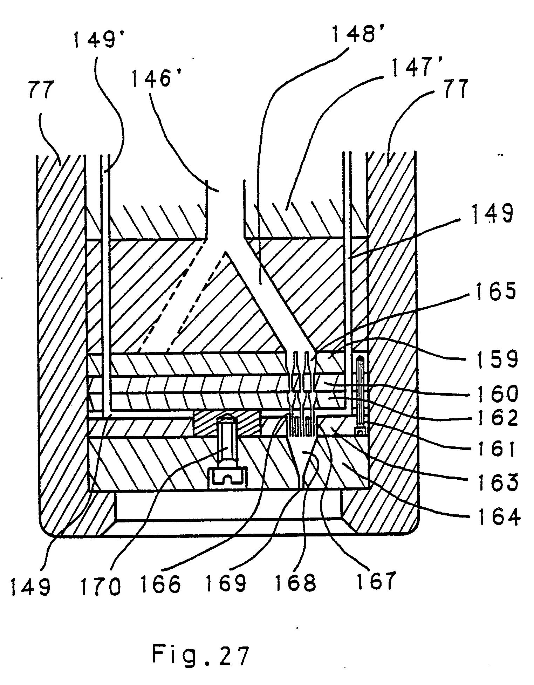

Figure 27 shows a structure for use in a process for making an "island in a sea"-type composite fiber. This is very similar to that in Figure 26, the main difference being the nozzles. The multi-layer structure flows to the upper nozzle plate 159 via 146' and 148'. Small holes 165 are provided in the upper nozzle plate 159. The multi-layer structure flows to the discharge collecting nozzle 169 in the lower nozzle plate 164 via the nozzles in the middle nozzle plates 160, 162 and 163 and is discharged through the nozzle 169. Pipes 166 are embedded into the middle nozzle plate 162 and kept beneath 160 to prevent any upward motion. They are fitted into the hole in the middle nozzle plate 163 via the component C-introducing space between the middle nozzle plates 162 and 163. The hole 167 in the middle nozzle plate 163 is somewhat larger than the combined pipes, forming a small annular space. Therefore, a core-sheath structure is formed in the hole 167, collected by the funnel-shaped collector 168 and smoothly constricted and discharged through the nozzle 169 as an "island in a sea" structure. First and second alternate fluid arranging elements are provided in the upper course 146' and a system as shown in Figure 23 is employed for the distribution of component B. The component C is introduced into 149. Numerals 170 and 161 are the bolts for clamping the nozzle plates to each other. They are also provided at other parts of the nozzle plates. Only three pipes are illustrated here. In practice, however, 16 pipes provided per unit would form 16 islands, for example. Suitable numbers of islands include 3, 4, 5, 7, 8, 11, 12, 13, 15, 16, 24, 36, 60, 70, 145, 223, ... etc. The proportion of islands (AB) can be increased to above 50% or in some cases to about 90%. By using such a system, fiber bundles can be formed and fibers of 100—1,000 microdenier are easy to obtain.

The description made heretofore is sufficient to cover the use of a spinning system. Further, it is clear from Figures 18, 26 and 27 that systems for producing 4-component fibers are easy to manufacture.

As shown in Figure 9 and as described above, the first alternate fluid arranging elements make an angle of about 90° with the second alternate fluid arranging elements

$$((90°\pm 45°)\pm(\text{integer})\times 180°).$$

Despite this, twisting elements in the form of twisted connecting pipes may be used. These will now be described.

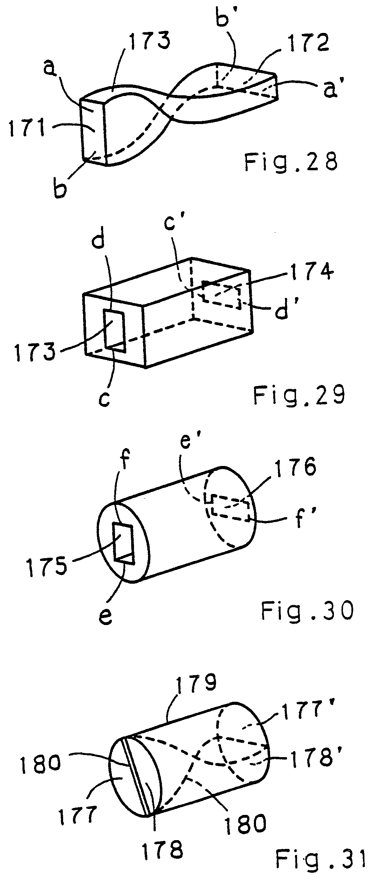

Figure 28 shows a 90°-twisted rectangular pipe. A fluid is twisted by 90° between flowing in at 171 and flowing out at 172. The angle of this twist can be increased when fluids have a high viscosity. During twisting, the parts of the fluid (a) and (b) at 171 become (a') and (b') respectively at 172.

Figure 29 shows a twisting element with a square outer shape. The holes 173 and 174 therein are the same as 171 and 172 in Figure 28, with respect to the twisting carried out. The parts of the fluid at (c) and (d) therefore become (c') and (d') respectively.

Figure 30 shows a twisting element with a cylindrical outer shape. It has the same twist between 175 and 176 as that in Figures 28 and 29.

The parts of the fluid at (e) and (f) become (e') and (f') respectively.

Figure 31 shows a twisting element whose inside and outside are both cylindrical. A twisting plate 180 is inserted therein so that the parts of the fluid at 177 and 178 become 177' and 178' respectively. However, it is preferable not to use a twisting element if possible, because it is more likely to disturb the fluid than an alternate fluid arranging element.

Next, alternate fluid arranging elements and their combination for use in carrying out the present invention will be described (in the absence of a twisting element described above).

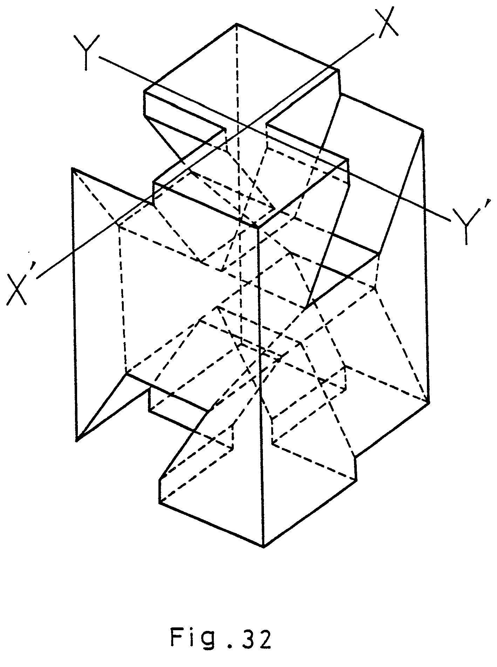

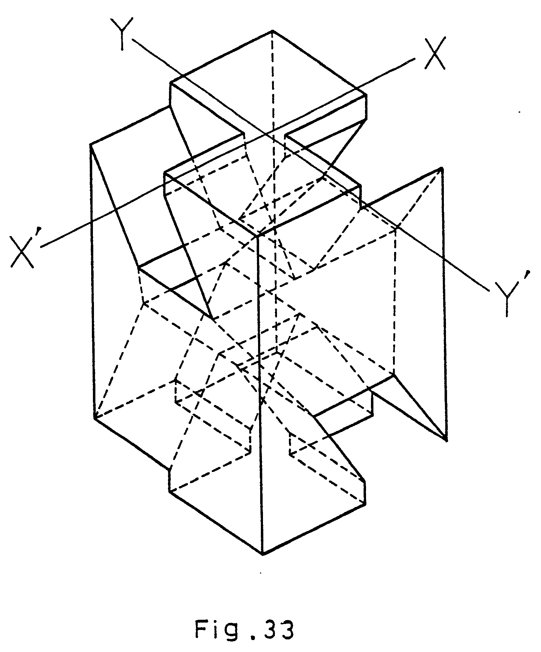

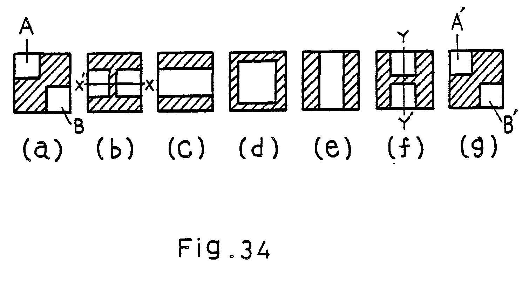

Figure 32 is a perspective view of an alternate fluid arranging element obtained by combining (a) and (b) shown in Figure 17, while Figure 33 is a perspective view of an alternate fluid arranging element devised by the present inventors. Figure 34 illustrates a number of successive cross-sections through the element shown in Figure 33, and shows the changing fluid passage between the inlet and outlet. Figures 33 and 34 are related in the same way as Figures 32 and 16. A major difference between Figures 16 and 34 is that they show the fluid interfaces formed parallel to the X and Y axes respectively.

The invention can be more easily understood by considering the alternate fluid arranging elements shown in Figure 32 (Figure 17) and Figure 33 as being the first and second fluid arranging elements, respectively. Thus, when the arrangement shown in Figure 16(d) is obtained through the final division of the first alternate fluid arranging elements, fluids are constricted and led to part A shown in Figure 34 while the third component is separately introduced into part B.

The present invention cannot be carried out without using a twisting element when only a conventional alternate fluid arranging element as shown in Figure 32 is used. However, this is not so when an alternate fluid arranging element as shown in Figure 33 is used.

Nevertheless, the invention may be carried out by using alternate fluid arranging elements as shown in Figures 33 and 32 (Figure 17) as the first and second alternate fluid arranging elements, respectively.

Next, the configurations and combinations of alternate fluid arranging elements that are suitable for uniformly dividing and arranging fluids and having a reduced effect of the duct wall will be described.

Being susceptible to the effects of duct wall, the alternate fluid arranging elements, particularly with highly viscous fluids, cause arrangement disturbance and biassed flow. Further problems occur in that the degree of decomposition of polymers near the wall of a duct is considerably different from that at the centre, because near the duct wall the fluid has a longer residence time and thus tends to stagnate.

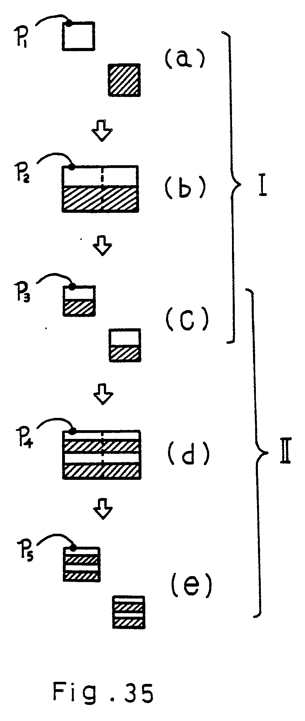

This will be described in connection with Figure 35.

In Figure 35(a), a part P1 of a fluid is located closest to the duct wall. The part P1 corresponds to parts P2, P3, P4 and P5 in (b), (c), (d) and (e) respectively, i.e. this part of the fluid remains close to the duct wall for a long period.

This arises because the combination of fluid layers has a fixed regularity and the duct for moving the fluid upon its division subsequent to its recombination does not have a constant diameter.

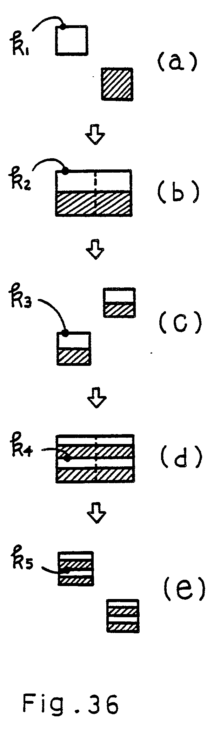

The principle of the system for avoiding the above problem is shown in Figure 36. Figure 36(a) shows fluids A and B at the inlets. The part k1 of a fluid at the duct wall should be noted. Figure 36(b) is a slightly enlarged drawing of the flattened fluid obtained after the overlapping. The part k1 has become the part k2. Next, the invention may use a novel method for returning the divided fluid after overlapping to the first and third quadrants, not to the second and fourth. Thus, as shown in Figure 36(c), the part k2 has become the part k3. Therefore, the next alternate fluid arranging element cannot be combined directly with another of the same kind. The system combines it with a new alternate fluid arranging element, which has the following function: The fluid divided as shown in Figure 36(c) is transferred and flattened so that the part k3 becomes the part k4 as shown in Figure 36(d), (a slightly enlarged drawing). Thereafter it is divided into two and the combination fluid is relocated as shown in (e). The part k4 has then become the part k5. This new alternate fluid arranging element has a different mode of fluid overlapping from conventional ones, and can therefore be used alternately with conventional elements. The parts of a fluid close to the duct wall are thus led to the center of the flow, so that fluids undergo a more uniform alternate arrangement. A pair of alternate fluid arranging elements, one of each type, is convenient because this enables the fluids at the inlet and outlet to agree with each other. Their efficiency as alternate fluid arranging elements does not differ at all from that of conventional elements.

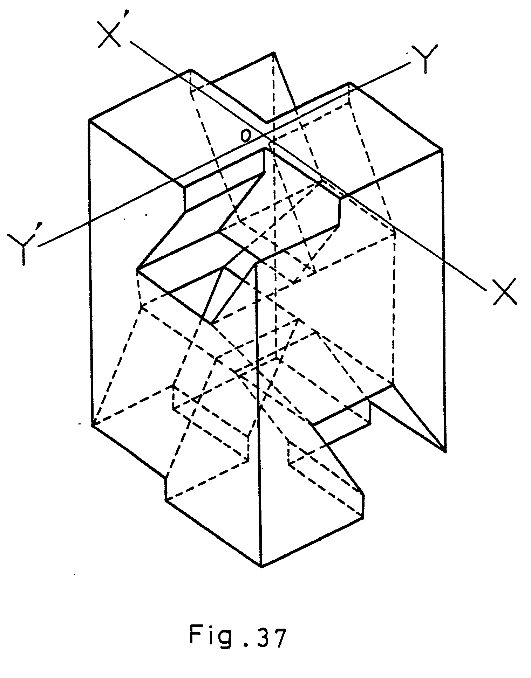

Figure 37 shows a duct structure in accordance with the present invention. Its inlet parts are provided at the second and fourth quadrants defined by the X and Y axes. The separate fluids are arranged parallel to the Y axis, joined along a central plane, deformed, cut into two parts arranged parallel to the X axis and the discharged parts are brought to the first and third quadrants.

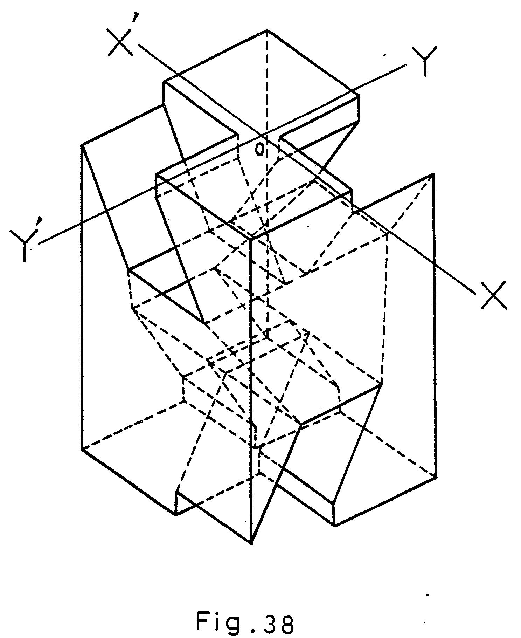

In a similar manner, Figure 38 shows inlet parts provided at the first and third quadrants. The separate fluids are arranged parallel to the Y axis, joined along a central plane, deformed, cut into two parts arranged parallel to the X axis and the discharged parts are brought to the second and fourth quadrants.

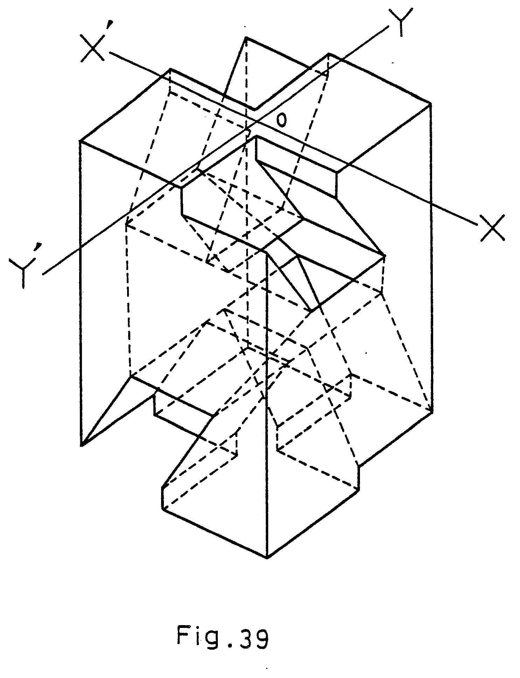

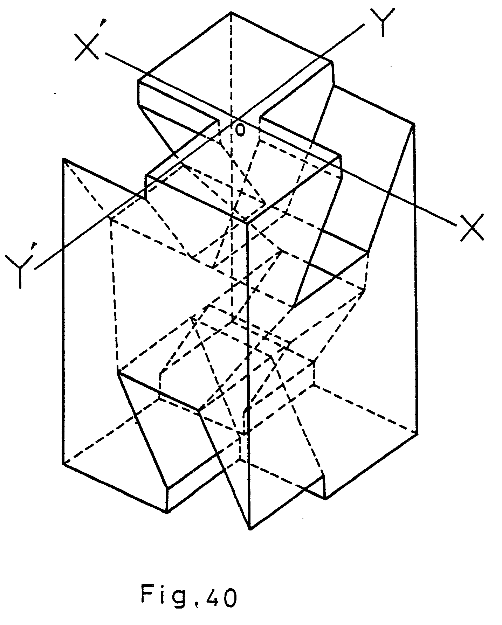

Figures 39 and 40 correspond to Figures 37 and 38, respectively. The arrangement direction in the former, however, is quite different from that in the latter. This is similar to the relationship between Figures 32 and 33. A combination of the structures shown in Figures 39 and 40 can therefore be

used in place of those shown in Figures 37 and 38. Further, the use of a combination of the elements shown in Figures 37 and 38 as the first alternate fluid arranging elements and a combination of those elements shown in Figures 39 and 40 as the second alternate fluid arranging elements is advantageous because no twisting element is necessary. Of course, these combinations can be used the other way round.

The fluids used in the units shown in Figures 37 and 38 can be paired as well as those used in the units shown in Figures 39 and 40. Much care is necessary in combining the fluids used in the units of Figures 37 and 40 and those used in the units of Figures 38 and 39, provided the same outer configuration is employed, because the initial state is recovered after forming the multi-layer flow. In the present invention this is called the correlation between racemic modifications. For preventing it, it is preferable to provide guide or knock-pin holes in the plates or columnar materials constituting such a duct, or make their exterior unsymmetrical or provide marks.

The structures in accordance with the present invention have been described heretofore mainly in connection with ducts. Their shape may, of course, take any form selected from triangles, squares, pentagons, hexagons, ..., circular plates, columns and so forth. Further, any of 1, 2, 3, 4, ... N pieces of such ducts can be provided for high efficiency. Their arrangement can be shaped into a petal, matrix, zigzag, chequered, multi-concentric and other forms. Further multiple combinations of the two multi-layer fluids are possible.

Excessively sudden overlapping or rearrangement is not preferable in such alternate fluid arranging elements. Flow passages or ducts should preferably be at an angle of less than 45° to the flow or combination direction of alternate fluid arranging elements (which generally agrees with their central line).

Examples of components:
If PET=polyethyleneterephthalate (or various known copolymers thereof), N=nylon (66, 6, etc), PE=polyethylene, PST=polystyrene, PBT=poly-butyleneterephthalate, and PEG=polyethyleneglycol, the following may be obtained:

    a. PET/5-sodiumsulfoisophthalate copolymer PET
    b. N/5-sodiumsulfoisophthalate copolymer PET
    c. PET/PST
    d. PET/2-ethylhexylacrylate copolymer PST
    e. N/2-ethylhexylacrylate copolymer PST
    f. PET/PE
    g. N/PE
    h. PBT/polyalkyleneglycol copolymer elastic PBT
    i. PET/PEG mixed PST
    j. N/PEG Mixed PST
    k. PET/N/5-sodiumsulfoisophthalate copoly-mer PET (3 components)
    l. PST/polymethylmethacrylate
    m. Polymethylmethacrylate or polymethyl-methacryalate deutride/high light transmittance fluorine-containing polymers (polyvinylidene fluoride).

All the objects of the present invention are achieved by these combinations of components. The fibers and films in accordance with the present invention exhibit a wide range of properties, making them applicable to many industrial and other uses.

The fibers according to the present invention are described in detail heretofore. Embodiments of the present invention will now be described, but the invention is not limited by these embodiments, and may be developed and applied in other ways.

Embodiment 1
Polyethyleneterephthalate as island component A and polystyrene as sea components B and C were spun at 285°C using a 3-component spinning machine with a number of the alternate fluid arranging elements as shown in Figures 15 and 16 arranged as shown in Figure 18. Therein the numbers of first and second alternate fluid arranging elements were fixed at 16 and 8, respectively, and the angle between the fluids AB and C at about 90°. An ordinary type of nozzle was used for spinning, of which the six discharge holes had a 15-fold increase in cross-sectional area and the funnel shaped device directly above them also had an increased cross-sectional area. The quantity of distributed islands of A per fiber was:

$$(2^8) \times (2^8)/6 = \text{about } 10,922$$

so that a fiber with about 11,000 islands was obtained.

The fiber was steam-elongated by 2.8 times and comprised 60 parts of component A, 20 parts of component B and 20 parts of component C (=B) and had a thickness of about 3 denier. The thickness of the ultrathin residues of the fiber (i.e. obtained by removing polystyrene using trichloroethylene) was calculated to be:

$$3 \times (60/100) \times (1/10,922) = \text{mean about } 0.00016 \text{ denier.}$$

Embodiment 2
85 parts of a multi-layer composite structure were made using 55 parts of polyethyleneterephthalate as island component A, 15 parts of polystyrene as component B and 15 parts of polystyrene as component B' in the same manner as Embodiment 1. This structure and 15 parts of polystyrene as component C (sea) were spun at 285°C using a 3-component composite spinning machine with the numbers of first and second alternate fluid arranging elements fixed at 18 and 9 respectively (total 27) and the number of discharge nozzle holes for the "island in a sea" fiber with 16 islands was fixed at 18. Spinning was carried out under suitable conditions. The fiber obtained had a thickness of 2.5 denier after elongation. When examined using an electron microscope, component A was well dispersed and very fine. The number of distributed regions of A per fiber was

$$(2^9)\times(2^9)/18 = \text{about } 14,563,$$

and the number of distributed regions A per island was

$$((2^9)\times(2^9)/18)/16 = \text{about } 910.$$

The thickness of the ultrathin fibers of A was calculated to be

$$2.5\times(55/100)\times(1/14,563) = \text{about } 0.000094$$
$$= 94 \text{ microdenier (mean).}$$

Thus, by removing the polystyrene from the fiber using trichloroethylene the residues should comprise 16 bundles of 900 pieces of 94 microdenier ultrathin fiber.

As described earlier, the multi-layer high molecular weight composite structures in accordance with the present invention are useful for fibers to be used for artificial leathers, waterproof high density woven and knitted fabrics, raised fabrics, and so forth, as well as among films for deflecting plates and sophisticated light-reflecting road signs.

Reference signs have been included in the claims but these are not intended to limit the scope of the claims, and the scope of protection afforded by the claims should not be regarded as limited by the reference signs therein.

**Claims**

1. A process for the production of a multi-layer high molecular weight composite structure wherein a primary multi-layer structure (46) of at least two high molecular weight fluids (A, B . . .) is made and a secondary multi-layer structure (52) is made by overlapping said primary structure (46) with another high molecular weight fluid C, of which a component may be the same as any of the components of said primary structure, so that the interfaces of the primary structure layers and those of the secondary structure layers subtend an angle θ and the interfaces of the primary structure layers are cut into a number of parts by said fluid C; and discharging said secondary multi-layer structure (52) through a spinning or film nozzle (37).

2. A process according to claim 1 wherein said angle θ lies between 90° and 45°.

3. A process according to claim 1 or claim 2 wherein the area of components independently dispersed in a cross-section of the multi-layer high molecular weight structure (52) form more than 50% of the total cross-sectional area.

4. A process according to any of claims 1 to 3 wherein the number of layers in said primary multi-layer structure (46) is more than 1.5 times the total number of layers of said primary multi-layer structure (46) and fluid C in said secondary multi-layer structure (52).

5. A process according to any preceding claim wherein said primary multi-layer structure (46) is made by repeating a process comprising the steps of dividing a multi-layer structure (40, 42, 43 . . .) of at least two high molecular weight fluids (A, B . . .) across the interfaces into at least two parts, overlapping these parts without rotation thereof, and increasing the size of said interfaces by compressing said overlapped parts.

6. A process according to any one of claims 1 to 4 wherein said primary multi-layer structure (46) is made by repeating a process consisting of the steps of dividing a multi-layer structure (40, 42, 43 . . .) of at least two high molecular weight fluids (A, B . . .) across the interfaces into at least two parts by means of a divider, increasing the size of said parts in a plane not parallel to that of the divider, and overlapping these parts without rotation thereof.

7. A process according to any preceding claim wherein said secondary multi-layer structure (52) is made by repeating a process comprising the steps of dividing a multi-layer structure (48 & 49, 50, 51 . . .) of said primary multi-layer structure (46) and fluid C into a plurality of parts, overlapping these parts without rotation thereof, so that the faces of component C intersect the interfaces of the primary multi-layer structure (46) and increasing the size of the interfaces between said primary multi-layer structure (46) and fluid C.

8. A process according to any of claims 1 to 6, wherein said secondary multi-layer structure (52) is made by repeating a process comprising the steps of dividing a multi-layer structure (48 & 49, 50, 51 . . .) of said primary multi-layer structure (46) and fluid C by a divider into a plurality of parts each having less layers in the primary multi-layer structure, increasing the size of said parts in a plane different from that of said divider and overlapping these parts without rotation thereof.

9. A process according to any of claims 5 to 8 wherein the total cross-sectional area of said fluids divided into a plurality of parts is substantially equal to the total area of said subsequent overlap.

10. A process according to any preceding claim wherein said fluid C is a multi-layer structure of at least two high molecular weight fluids.

11. A process according to any preceding claim further comprising the step of covering the secondary multi-layer structure (52) with another fluid D (of which a component may be the same as any of the components of said secondary structure) to form a core-sheath structure or making an "island in a sea" structure with said secondary multi-layer structure (52) as the "island" component and said fluid D as the "sea" component or making a "divided" type structure with a plurality of said secondary multi-layer structures (52) and said fluid D as a dividing component, and discharging the resulting structure through a spinning or film nozzle (37).

12. Apparatus for forming and discharging a multi-layer high molecular weight composite structure resulting from a process according to any preceding claim comprising

(a) ducts (93, 94) for the high molecular weight fluids (A, B . . .) which are to be components of the primary multi-layer structure (46)

(b) a number of connected first alternate fluid arranging elements (91, 90) adapted to receive the high molecular weight fluids from said ducts (93, 94) and form therefrom the primary multi-layer structure (46)

(c) a duct or ducts (89) for the high molecular weight fluid C

(d) a number of connected second alternate fluid arranging elements (87, 84) adapted to receive the primary multi-layer structure (46) from (b) and the high molecular weight fluid C from (c) and form therefrom the secondary multi-layer structure (52); and

(e) a discharge element (79) having at least one spinning hole or a film slit (78).

13. Apparatus according to claim 12, in which the number of the first alternate fluid arranging elements (91, 90) exceed 1.5 times that of the second alternate fluid arranging elements (87, 84).

14. Apparatus according to claim 12 or claim 13 wherein each first alternate fluid arranging element (91, 90) comprises means to receive a multi-layer structure of high molecular weight fluids (A, B . . .), a divider for splitting the said multi-layer structure across the interface or interfaces into at least two parts, passages for directing the said parts so that they overlap, and a shape-varying passage to receive the so overlapped parts, the cross-section of the shape-varying passage changing along its length but without substantial variation of cross-sectional area.

15. Apparatus according to claim 12 or claim 13 wherein each first alternate fluid arranging element (91, 90) comprises means to receive a multi-layer structure of high molecular weight fluids (A, B . . .), a divider for splitting the said multi-layer structure across the interface or interfaces into at least two parts, shape-varying passages to receive the said parts, the cross-section of the shape-varying passages changing along their length but without substantial variation of cross-sectional area and means for overlapping the parts from the shape-varying passages.

16. Apparatus according to any of claims 12 to 15 wherein each second alternate fluid arranging element (87, 84) comprises means to receive the primary multi-layer structure and the high molecular weight fluid C, a divider for splitting the combined multi-layer structure across the interface or interfaces between the primary multi-layer structure and the high molecular weight fluid C, into at least two parts, passages for directing the said parts so that they overlap, and a shape-varying passage to receive the so overlapped parts, the cross-section of the shape-varying passage changing along its length but without substantial variation of cross-sectional area.

17. Apparatus according to any of claims 12 to 15 wherein each second alternate fluid arranging element (87, 84) comprises means to receive the primary multi-layer structure and the high molecular weight fluid C, a divider for splitting the combined multi-layer structure across the interface or interfaces between the primary multi-layer structure and the high molecular weight fluid C, into at least two parts, shape-varying passages to receive the said parts, the cross-section of the shape-varying passages changing along their length but without substantial variation of cross-sectional area and means for overlapping the parts from the shape-varying passages.

18. Apparatus according to any of claims 12 to 17 wherein some or all of the first and/or second alternate fluid arranging elements (91, 90, 87, 84) have a number of flow dividing and varying units extending longitudinally in series through a hollow square duct, said units having an upper and lower flow dividing plate and a guide plate against which the divided liquids flow, the elements being arranged so that there is an alternation of the manner of overlap between the fluids flowing on one side of the duct and the fluids flowing on the other side of the duct to alleviate the problems occasioned by flow adjacent the duct wall.

**Patentansprüche**

1. Verfahren zur Herstellung einer mehrschichtigen hochmolekularen Verbundstruktur, bei dem eine primäre Mehrschichtstruktur (46) aus mindestens zwei hochmolekularen Flüssigkeiten (A, B . . .) hergestellt und eine sekundäre Mehrschichtstruktur (52) hergestellt wird, indem die primäre Struktur (46) mit einer anderen hochmolekularen Flüssigkeit C überlappt wird, von der eine Komponente die gleiche sein kann wie irgendeine Komponente der primären Struktur, so daß die Trennflächen der Schichten der primären Struktur und diejenigen der Schichten der sekundären Struktur einen Winkel θ einschließen und die Trennflächen der Schichten der primären Struktur durch die besagte Flüssigkeit C in eine Anzahl von Teilen zerschnitten werden; und bei dem die sekundäre Mehrschichtstruktur (52) durch eine Spinn- oder Foliendüse (34) ausgestoßen wird.

2. Verfahren nach Anspruch 1, wobei der Winkel θ zwischen 90° und 45° liegt.

3. Verfahren nach Anspruch 1 oder 2, wobei die Fläche der Komponenten, die in einem Querschnitt der hochmolekularen Mehrschichtstruktur (52) unabhängig verteilt sind, mehr als 50% des gesamten Querschnittsfläche beträgt.

4. Verfahren nach einem der Ansprüche 1 bis 3, wobei die Anzahl der Schichten in der primären Mehrschichtstruktur (46) mehr als das 1,5- fache der Gesamtzahl der Schichten der primären Mehrschichtstruktur (46) und der Flüssigkeit C in der sekundären Mehrschichtstruktur (52) beträgt.

5. Verfahren nach einem der vorhergehenden Ansprüche, wobei die primäre Mehrschichtstruktur (46) hergestellt wird durch Wiederholen eines Verfahrens, umfassend die Schritte des Unterteilens einer Mehrschichtstruktur (40, 42, 43) aus mindestens zwei hochmolekularen Flüssigkeiten (A, B ...) quer zu den Trennflächen in mindestens zwei Teile, Überlappen dieser Teile ohne Verdrehung derselben und Vergrößern der Abmessung der Trennflächen durch Zusammendrücken der überlappenden Teile.

6. Verfahren nach einem der Ansprüche 1 bis 4, wobei die primäre Mehrschichtstruktur (46) durch Wiederholen eines Verfahrens hergestellt wird, umfassend die Schritte des Unterteilens einer Mehrschichtstruktur (40, 42, 43) aus mindestens zwei hochmolekularen Flüssigkeiten (A, B ...) quer zu den Trennflächen in mindestens zwei Teile mit einer Trenneinrichtung, Vergrößern der Abmessungen der Teile in einer Ebene, die zu derjenigen der Trenneinrichtung nicht parallel ist, und Überlappen dieser Teile ohne Verdrehung derselben.

7. Verfahren nach einem der vorhergehenden Ansprüche, wobei die sekundäre Mehrschichtstruktur (52) durch Wiederholen eines Verfahrens hergestellt wird, umfassend die Schritte des Zerteilens einer Mehrschichtstruktur (48 & 49, 50, 51) der primären Mehrschichtstruktur (46) und der Flüssigkeit C in eine Vielzahl von Teilen, Überlappen dieser Teile ohne Verdrehung derselben, so daß die Seitenflächen der Komponente C die Trennflächen der primären Mehrschichtstruktur (46) schneiden, und Vergrößern der Abmessung der Trennflächen zwischen der primären Mehrschichtstruktur (46) und der Flüssigkeit C.

8. Verfahren nach einem der Ansprüche 1 bis 6, wobei die sekundäre Mehrschichtstruktur (52) hergestellt wird durch Wiederholen eines Verfahrens, umfassend die Schritte des Zerteilens einer Mehrschichtstruktur (48 & 49, 50, 51) der primären Mehrschichtstruktur (46) und der Flüssigkeit C durch eine Trenneinrichtung in eine Vielzahl von Teilen, die jeweils weniger Schichten in der primären Mehrschichtstruktur haben, Vergrößern der Abmessung dieser Teile in einer von der Ebene der Trenneinrichtung verschiedenen Ebene und Überlappen dieser Teile ohne Verdrehung derselben.

9. Verfahren nach einem der Ansprüche 5 bis 8, wobei die gesamte Querschnittsfläche der in eine Vielzahl von Teilen zerteilten Flüssigkeiten im wesentlichen der Gesamtfläche der nachfolgenden Überlappung entspricht.

10. Verfahren nach einem der vorhergehenden Ansprüche, wobei die Flüssigkeit C eine Mehrschichtstruktur aus mindestens zwei hochmolekularen Flüssigkeiten ist.

11. Verfahren nach einem der vorhergehenden Ansprüche, ferner umfassend den Schritt des Bedeckens der sekundären Mehrschichtstruktur (52) mit einer anderen Flüssigkeit D (von der eine Komponente die gleiche sein kann wie irgendeine Komponente der sekundären Struktur), um eine Kern-Mantelstruktur zu bilden oder um eine "Insel im See" Struktur zu schaffen, wobei die sekundäre Mehrschichtstruktur (52) die "Insel" Komponente und die Flüssigkeit D die "See" Komponente bildet, oder um eine Struktur der "unterteilten" Art mit einer Vielzahl der besagten sekundären Mehrschichtstrukturen (52) und der Flüssigkeit D als Unterteilungskomponente zu schaffen, und Ausstoßen der erhaltenen Struktur durch eine Spinn- oder Foliendüse (37).

12. Vorrichtung zum Ausbilden und Ausstoßen einer mehrschichtigen hochmolekularen Verbundstruktur, die mit einem Verfahren nach einem vorhergehenden Ansprüche erhalten wurde, umfassend

(a) Kanäle (93, 94) für die hochmolekularen Flüssigkeiten (A, B ...), die die Komponenten der primären Mehrschichtstruktur (46) bilden,

(b) eine Anzahl verbundener erster wechselweise die Flüssigkeit anordnende Elemente (91, 90), die die hochmolekularen Flüssigkeiten von den besagten Kanälen (93, 94) empfangen und aus diesen die primäre Mehrschichtstruktur (46) bilden können,

(c) einen Kanal oder Kanäle (89) für die hochmolekulare Flüssigkeit C,

(d) eine Anzahl verbundener, wechselweise die Flüssigkeit anordnende Elemente (87, 84), die die primäre Mehrschichtstruktur (46) von (b) und die hochmolekularen Flüssigkeit C von (c) empfangen und aus diesen die sekundäre Mehrschichtstruktur (52) bilden können; und

(e) ein Ausstoßelement (79), das mindestens eine Spinndüse oder einen Folienschlitz (78) hat.

13. Vorrichtung nach Anspruch 12, wobei die Anzahl der ersten wechselweise die Flüssigkeit anordnenden Elemente (91, 90) das 1,5-fache der zweiten wechselweise die Flüssigkeit anordnenden Elemente (87, 84) beträgt.

14. Vorrichtung nach Anspruch 12 oder 13, wobei jedes erste wechselweise die Flüssigkeit anordnende Element (91, 90) Mittel zur Aufnahme einer Mehrschichtstruktur aus hochmolekularen Flüssigkeiten (A, B ...), ein Trenneinrichtung zum Zertrennen dieser Mehrschichtstruktur quer zu der oder zu den Trennflächen in mindestens zwei Teile, Kanäle, um diese Teile so zu leiten, daß sie sich überlappen, und einen Formänderungskanal umfassen, um die so überlappten Teile aufzunehmen, wobei sich der Querschnitt des Formänderungskanals über dessen Länge, aber ohne wesentliche Änderung der Querschnittsfläche verändert.

15. Vorrichtung nach Anspruch 12 oder 13, wobei jedes erste wechselweise der Flüssigkeit anordnende Element (91, 90) Mittel zur Aufnahme einer Mehrschichtstruktur aus hochmolekularen Flüssigkeiten (A, B ...) eine Trenneinrichtung zum Zerteilen dieser Mehrschichtstruktur quer zu der oder den Trennflächen in mindestens zwei Teile, Formänderungskanäle zur Aufnahme dieser Teile, wobei sich der Querschnitt der Formänderungskanäle über deren Länge ändert, aber ohne wesentliche Veränderung der Querschnittsfläche, und Mittel zum Überlappen der Teile aus den Formänderungskanälen umfaßt.

16. Vorrichtung nach einem der Ansprüche 12 bis 15, wobei jedes zweite wechselweise die Flüssigkeit anordnende Element (87, 84) Mittel zur Aufnahme der primären Mehrschichtstruktur und der hochmolekularen Flüssigkeit C, eine Trenneinrichtung zum Zerteilen der kombinierten Mehrschichtstruktur quer zu der oder zu den Trennflächen zwischen der primären Mehrschichtstruktur und der hochmolekularen Flüssigkeit C in mindestens zwei Teile, Kanäle zum Leiten dieser Teile, so daß sie sich überlappen, und einen Formänderungskanal zur Aufnahme der so überlappten Teile umfaßt, wobei sich der Querschnitt des Formänderungskanals über seine Länge ändert, aber ohne wesentliche Änderung der Querschnittsfläche.

17. Vorrichtung nach einem der Ansprüche 12 bis 15, wobei jedes zweite wechselweise die Flüssigkeit anordnende Element (87, 84) Mittel zur Aufnahme der primären Mehrschichtstruktur (46) und der hochmolekularen Flüssigkeit C, eine Trenneinrichtung zum Zertrennen der kombinierten Mehrschichtstruktur quer zu der oder zu den Trennflächen zwischen der primären Mehrschichtstruktur und der hochmolekularen Flüssigkeit C in mindestens zwei Teile, Formänderungskanäle zur Aufnahme dieser Teile, wobei sich der Querschnitt der Formänderungskanäle über deren Länge ändert, aber ohne wesentliche Veränderung der Querschnittsfläche, und Mittel zum Überlappen der Teile aus den Formänderungskanälen umfaßt.

18. Vorrichtung nach einem der Ansprüche 12 bis 17, wobei einige oder alle der ersten und/oder zweiten wechselweise die Flüssigkeit anordnenden Elemente (91, 90, 87, 84) eine Anzahl von die Flüssigkeit trennenden und verändernden Einheiten haben, die sich in Längsrichtung in Serien durch einen hohlen quadratischen Kanal erstrekken, wobei diese Einheiten eine obere und eine untere Strömungsteilplatte und eine Führungsplatte haben, gegen die die geteilten Flüssigkeiten strömen, wobei die Elemente so angeordnet sind, daß ein Wechsel der Art der Überlappung zwischen den auf der einen Seite des Kanals strömenden Flüssigkeiten und den auf der anderen Seite des Kanals strömenden Flüssigkeiten erfolgt, um die bei einer Strömung neben der Kanalwand auftretenden Probleme zu überwinden.

**Revendications**

1. Un procédé pour la production de structures composites multicouches à poids moléculaire élevé dans lequel une structure multicouche primaire (46) d'au moins deux fluides à poids moléculaire élevé (A, B . . .) est réalisée et une structure multicouche secondaire (52) est réalisée par chevauchement de ladite structure primaire (46) avec un autre fluide à poids moléculaire élevé (C), dont un composant peut être le même que n'importe lequel des composants de ladite structure primaire, afin que les interfaces des couches de la structure primaire et celles des couches de la structure secondaire sous-tendent un angle (θ) et que les interfaces des couches de la structure primaire soient découpées en un nombre de parties par ledit fluide (C), et on délivre ladite structure multicouche (52) à travers une buse de filage ou de film (31).

2. Un procédé selon la revendication 1, dans lequel ledit angle (θ) est entre 90° et 45°.

3. Un procédé selon la revendication 1 ou la revendication 2, dans lequel la zone des composants dispersés de manière indépendante dans une section transversale de la structure multicouche à poids moléculaire élevé (52) forme plus de 50% de la zone de section transversale totale.

4. Un procédé selon l'une des revendications 1 à 3, dans lequel le nombre des couches dans ladite structure multicouche primaire (46) est plus de 1,5 fois le nombre total de couches de ladite structure multicouche primaire (46) et de fluide (C) dans ladite structure multicouche secondaire (52).

5. Un procédé selon l'une des revendications précédentes, dans lequel ladite structure multicouche primaire (46) est réalisée en répétant un procédé comprenant les phases de division d'une structure multicouche (40, 42, 43 . . .) d'au moins deux fluides à poids moléculaire élevé (A, B . . .) à travers les interfaces en au moins deux parties, de chevauchement de ces parties sans rotation de celles-ci et d'augmentation de la dimension desdites interfaces en comprimant lesdites parties chevauchées.

6. Un procédé selon l'une des revendications 1 à 4, dans lequel ladite structure multicouche primaire (46) est réalisée en répétant un procédé se composant des phases consistant à diviser une structure multicouche (40, 42, 43 . . .) d'au moins deux fluides à poids moléculaire élevé (A, B . . .) à travers les interfaces en deux parties au moins au moyen d'un diviseur, à augmenter la dimension desdites parties dans un plan non parallèle à celui du diviseur et à faire chevaucher ces parties sans rotation de celles-ci.

7. Un procédé selon l'une des revendications précédentes, dans lequel ladite structure multicouche secondaire (52) est réalisée en répétant un procédé englobant les phases consistant à diviser une structure multicouche (48, 49, 50, 51 . . .) de ladite structure multicouche primaire (46) et de fluide (C) en une pluralité de parties, à faire chevaucher ces parties sans rotation de celles-ci, afin que les faces du composant (C) coupent les interfaces de la structure multicouche primaire (46) et à augmenter la dimension des interfaces entre ladite structure multicouche primaire et le fluide (C).

8. Un procédé selon l'une des revendications 1 à 6, dans lequel ladite structure multicouche secondaire (52) est réalisée en répétant un procédé se composant des phases consistant à diviser une structure multicouche (48 et 49, 50, 51 . . .) de ladite structure multicouche primaire (46) et de fluide (C) par un diviseur en une pluralité de parties, chacune ayant moins de couches dans la structure multicouche primaire, à augmenter la dimension desdites parties dans un plan différent de celui du diviseur et à faire chevaucher ces parties sans rotation de celles-ci.

9. Un procédé selon l'une des revendications 5 à 8, dans lequel la zone totale de section transversale desdits fluides divisée en une pluralité de parties est sensiblement égale à la zone totale dudit chevauchement subséquent.

10. Un procédé selon l'une des revendications précédentes, dans lequel le fluide (C) est une structure multicouche d'au moins deux fluides à poids moléculaire élevé.

11. Un procédé selon l'une des revendications précédentes, comprenant en outre la phase consistant à recouvrir la structure multicouche secondaire (52) avec un autre fluide (D) (dont un composant peut être le même que n'importe lequel des composants de ladite structure secondaire) pour former une structure noyau-enveloppe ou à faire une structure "îlot dans une mer" auc ladite structure multicouche secondaire (52) en tant que composant "îlot" et ledit fluide (D) en tant que composant "mer" ou à faire une structure de type "divisé" avec une pluralité desdites structures multicouches secondaires (52) et dudit fluide (D) en tant que composant diviseur et à délivrer la structure en résultant à travers une buse de filage ou de film (37).

12. Appareil pour former et délivrer une structure composite multicouche à poids moléculaire élevé résultant d'un procédé selon l'une des revendications précédentes, comprenant:

(a) des tuyauteries (93, 94) pour les fluides à poids moléculaire élevé (A, B . . .) qui doivent être des composants de la structure multicouche primaire (46),

(b) un certain nombre de premiers éléments connectés d'arrangement de fluide alterné (91, 90) adaptés pour recevoir les fluides à poids moléculaire élevé à partir desdites tuyauteries (93, 94) et former la structure multicouche primaire (46).

(c) une tuyauterie ou des tuyauteries (89) pour le fluide (C) à poids moléculaire élevé.

(d) un certain nombre de seconds éléments reliés d'arrangement de fluide alterné (81, 84) adaptés pour recevoir la structure multicouche primaire (46) à partir de (b) et le fluide (C) à poids moléculaire élevé à partir de (c) et former à partir de ceux-ci la structure multicouche secondaire (52); et

(e) un élément de délivrance (79) ayant au moins un trou de filage ou une fente pour film (18).

13. Un appareil selon la revendication 12, dans lequel le nombre de premiers éléments d'arrangement de fluide alterné (91, 90) dépasse 1,5 fois celui des seconds éléments d'arrangement de fluide alterné (81, 84).

14. Appareil selon la revendication 12 ou la revendication 13, dans lequel chaque premier élément d'arrangement de fluide alterné (91, 90) se compose de moyes pour recevoir une structure multicouche de fluide à poids moléculaire élevé (A, B . . .), d'un diviseur pour fractionner ladite structure multicouche à travers l'interface ou les interfaces en au moins deux parties, de passage pour diriger lesdites parties afin qu'elles se chevauchent et d'un passage à forme variable pour recevoir les parties ainsi chevauchées, la section transversale du passage à forme variable changeant le long de sa longueur mais sans variation sensible de la zone de section transversale.

15. Appareil selon la revendication 12 ou la revendication 13, dans lequel chaque premier élément d'arrangement de fluide alterné (91, 90) se compose de moyens pour recevoir une structure multicouche de fluide à poids moléculaire élevé (A, B . . .), d'un diviseur pour fractionner ladite structure multicouche à travers l'interface ou les interfaces en au moins deux parties, de passage à forme variable pour recevoir lesdites parties, la section transversale des passages à forme variable changeant le long de leur longueur mais sans variation sensible de la zone de section transversale et de moyens pour faire chevaucher les parties à partir des passages à forme variable.

16. Appareil selon l'une des revendications 12 à 15, dans lequel chaque second élément d'arrangement de fluide alterné (81, 84) se compose de moyens pour recevoir la structure multicouche primaire et le fluide (C) à poids moléculaire élevé d'un diviseur pour fractionner la structure combinée multicouche à travers l'interface ou les interfaces entre la structure multicouche primaire et le fluide (C) à poids moléculaire élevé en deux parties au moins, de passages pour diriger lesdites parties afin qu'elles se chevauchent et d'un passage à forme variable pour recevoir les parties ainsi chevauchées, la section transversale du passage à forme variable changeant le long de sa longueur mais sans variation sensible de la zone de section transversale.

17. Appareil selon l'une des revendications 12 à 15, dans lequel chaque second élément d'arrangement de fluide alterné (81, 84) se compose de moyens pour recevoir la structure multicouche primaire et le fluide (C) à poids moléculaire élevé, d'un diviseur pour fractionner la structure combinée multicouche à travers l'interface ou les interfaces entre la structure multicouche primaire et le fluide (C) à poids moléculaire élevé, en deux parties au moins, de passages à forme variable pour recevoir lesdites parties, la section transversale des passages à forme variable changeant le long de leur longueur mais sans variation sensible de la zone de section transversale et de moyens pour faire chevaucher les parties à partir des passages à forme variable.

18. Appareil selon l'une des revendications 12 à 17, dans lequel quelques-uns ou tous les premiers et/ou seconds éléments d'arrangement de fluide alterné (91, 90, 87, 84) ont un nombre d'unités de variation et de division de flux s'étendant longitudinalement en série à travers une tuyauterie carrée creuse, lesdites unités ayant une plaque de division de flux supérieure et inférieure et une plaque guide contre laquelle les liquides divisés s'écoulent, les éléments étant arrangés de telle manière qu'il y ait une alternance de la manière de chevauchement entre les fluides s'écoulant sur un côté de la tuyauterie et les fluides s'écoulant sur l'autre côté de la tuyauterie pour réduire les problèmes provoqués par un flux adjacent à la paroi de la tuyauterie.

Fig. 1

Fig. 2

Fig. 3

Fig.4

Fig.5

Fig.6

(a)

(b)

Fig.7

(a)

(b)

(c)

Fig. 8

(d)

(e)

(f)

(g)

Fig . 8

(h)

(i)

(a)

(b)

Fig . 8

Fig.9

Fig.10

Fig.11

Fig.12

(c)

(b)    (a)

Fig.15

72    73

(a)    (b)    (c)    (d)

74

(e)    (f)    (g)

Fig.16

Fig.13

Fig.14

75

75''''''

75'

X

75''''

75''''

75''

U

75'''

W

V

(a)

76

X'

76'

76'''

u'

76''

w'

V'

(b)

Fig.17

Fig.18 (a)

Fig.18(b)

Fig.19

15

A ——————— B

111

C —————→ ↩90°

112

(a)

113

90°↩

C —————→

114

A B

(b)

↩90°

C ——————→

A

B

115

116

117

(c)

Fig. 20

Fig.21

17

Fig.22(a)

Fig. 22 (b)

Fig.23

Fig.24

Fig.25

Fig.26

Fig.27

Fig.28

Fig.29

Fig.30

Fig.31

Fig.32

Fig.33

Fig.34

Fig.35

Fig.36

Fig.37

Fig.38

Fig.39

Fig, 40